(19) Europäisches Patentamt
European Patent Office
Office européen des brevets

(11) **EP 3 474 623 B1**

(12) **EUROPEAN PATENT SPECIFICATION**

(45) Date of publication and mention
of the grant of the patent:
**14.04.2021 Bulletin 2021/15**

(21) Application number: **17842684.7**

(22) Date of filing: **26.06.2017**

(51) Int Cl.:
***H04W 74/08*** *(2009.01)*       *H04W 16/14* *(2009.01)*

(86) International application number:
**PCT/CN2017/090045**

(87) International publication number:
**WO 2018/036260 (01.03.2018 Gazette 2018/09)**

(54) **DATA TRANSMISSION METHOD, DEVICE AND SYSTEM**

DATENÜBERTRAGUNGSVERFAHREN, -VORRICHTUNG UND -SYSTEM

PROCÉDÉ, DISPOSITIF, ET SYSTÈME DE TRANSMISSION DE DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.08.2016 CN 201610711810**

(43) Date of publication of application:
**24.04.2019 Bulletin 2019/17**

(73) Proprietor: **Huawei Technologies Co., Ltd.
Longgang District
Shenzhen, Guangdong 518129 (CN)**

(72) Inventors:
• **WU, Ji**
**Shenzhen**
**Guangdong 518129 (CN)**
• **LUO, Jun**
**Shenzhen**
**Guangdong 518129 (CN)**
• **LIN, Yingpei**
**Shenzhen**
**Guangdong 518129 (CN)**
• **SU, Hongjia**
**Shenzhen**
**Guangdong 518129 (CN)**

(74) Representative: **Pfenning, Meinig & Partner mbB
Patent- und Rechtsanwälte
Theresienhöhe 11a
80339 München (DE)**

(56) References cited:
WO-A1-2016/010684       WO-A1-2016/048717
CN-A- 105 722 097        US-A1- 2011 116 401
US-A1- 2016 128 099      US-A1- 2016 157 264
US-A1- 2019 029 047

**Description**

**TECHNICAL FIELD**

This application relates to the communications field, and in particular, to a data transmission method, apparatus, and system.

**BACKGROUND**

In the communications standard 802.11 (including the communications standard 802. 11ad and the communications standard 802.11ay), a device can transmit data on a corresponding channel with a frequency of 60 gigahertzes (GHz).

For example, when an 802.11 communications device needs to transmit data, the 802.11 communications device first needs to determine a plurality of channels that can be currently accessed, and then may determine, from the plurality of channels that can be currently accessed, a target channel that can currently transmit data, and transmit the data on the target channel. Specifically, when a transmit end is on the target channel that can currently transmit data, the transmit end may first randomly determine a quantity of slots of each of the plurality of channels that can be currently accessed, and perform clear channel assessment (clear channel assessment, CCA) detection on each channel based on the quantity of slots of each channel and by using a CCA detection mechanism, so as to determine that a status of each channel is idle or busy, and determine, as the target channel, a channel for which a result of the CCA detection is idle.

The new radio-unlicensed standard (new radio-unlicensed, NR) of the 3rd Generation Partnership Project (3rd Generation Partnership Project, 3GPP) stipulates that an NRU (a high-frequency communications device in NR) communications device transmits data on a low bandwidth channel corresponding to a higher frequency, for example, 60 GHz. Because the 802.11 communications device also transmits data on the corresponding channel with the frequency of 60 GHz, and a bandwidth of the channel used by the 802.11 communications device to transmit data is far greater than a bandwidth of a channel used by the NRU communications device to transmit data, so that the CCA detection mechanism used by the 802.11 communications device when transmitting the data cannot be applicable to the NRU communications device, and the 802.11 communications device is likely to collide with the NRU communications device when transmitting data. Therefore, the NRU communications device and the 802.11 communications device cannot be compatible with each other.

WO 2016/010684 A1 relates to one or more techniques for scaling the bandwidth of a carrier. Available sub-channels of an unlicensed radio frequency spectrum band may be determined, and the available sub-channels may be included in the carrier. The available sub-channels may be adjacent or non-adjacent sub-channels. The bandwidth of the carrier may be determined according to which sub-channels are included in the carrier. In this way, the bandwidth of the carrier may be scaled according to the available sub-channels.

**SUMMARY**

According to the present invention, the above objects are solved by the claimed matter according to the independent claims. To resolve a problem that an NRU communications device and an 802.11 communications device cannot be compatible with each other, this application provides a data transmission method, apparatus, and system. The technical solutions are as follows:

According to a first aspect, a data transmission method is provided, where the method is used for a communications device and includes:

determining an initial channel set, where the initial channel set includes all channels that the communications device can currently access;
performing initial clear channel assessment CCA detection on all the channels in the initial channel set;
determining, as a target channel, a channel that is in the initial channel set and for which a result of the initial CCA detection is idle;
performing auxiliary CCA detection on a preset channel, where each channel in the initial channel set is a subchannel of the preset channel, a frequency of the preset channel is the same as a frequency of the each channel in the initial channel set, and a bandwidth of the preset channel is larger than a bandwidth of the each channel in the initial channel set; and
if a result of the auxiliary CCA detection is idle, transmitting target data on the target channel.

After determining all the channels that can be currently accessed, and determining the target channel for which the result of the initial CCA detection is idle, the communications device performs the auxiliary CCA detection on the preset channel again, and transmits the target data on the target channel only when the result of the auxiliary CCA detection is idle. In other words, after determining the target channel for transmitting data, an NRU communications device needs to detect whether an 802.11 communications device transmits data on a high bandwidth channel corresponding to the same frequency, and data is transmitted on the target channel only when the 802.11 communications device does not transmit data on the high bandwidth channel of the same frequency, thereby effectively avoiding conflict between the NRU communications device and the 802.11 communications device when transmitting the target data, and implementing mutual compatibility between the NRU communications device and the 802.11 communications device.

Optionally, a frequency corresponding to the preset channel is 60 GHz, and a bandwidth of the preset channel is 2.16 GHz.

According to a second aspect, a data transmission method is provided, where the method is used for a communications device and includes:

detecting whether a preamble sent by a future generation FG60 communications device after obtaining a preset channel by contending is received, where a frequency corresponding to the preset channel is 60 GHz, and a bandwidth of the preset channel is 2.16 GHz;
if the preamble is received, determining an initial channel set, where the initial channel set includes all channels that the communications device can currently access, and each channel in the initial channel set is a subchannel of the preset channel;
performing initial clear channel assessment CCA detection on all the channels in the initial channel set;
determining, as a target channel, a channel that is in the initial channel set and for which a result of the initial CCA detection is idle; and
transmitting target data on the target channel.

When receiving the preamble sent by the FG60 communications device, the NRU communications device determines all the channels that can be currently accessed, and after determining the target channel for which the result of the initial CCA detection is idle, transmits the target data on the target channel. In other words, the NRU communications device transmits data on the target channel only after determining that the 802.11 communications device does not transmit data, and determining that the FG60 communications device does not transmit data on the target channel, thereby effectively avoiding conflict between the NRU communications device and the 802.11 communications device and the FG60 communications device when transmitting the target data, and implementing mutual compatibility between the NRU communications device, and the 802.11 communications device and the FG60 communications device.

It should be noted that before the FG60 communications device sends the preamble, the FG60 communications device may contend for a channel on a preset channel corresponding to a frequency of 60 GHz and a bandwidth of 2.16 GHz, or transmit data on the preset channel after obtaining the preset channel by contending. After the FG60 communications device sends the preamble, the FG60 communications device needs to contend for a channel on a corresponding low bandwidth whose frequency is 60 GHz, and transmits data on a channel of the low bandwidth after obtaining the channel by contending. For example, the bandwidth of the low bandwidth channel for transmitting data by the FG60 communications device may be the same as the bandwidth of the channel for transmitting data by the NRU communications device. In other words, after the FG60 communications device sends the preamble, the FG60 communications device needs to contend with the NRU communications device on a channel of a same bandwidth, and transmits data after obtaining the channel by contending.

Optionally, the preamble includes a network allocation vector NAV that is used to indicate a remaining time for data transmission, where the transmitting target data on the target channel includes:
transmitting the target data on the target channel based on the remaining time for data transmission indicated by the NAV.

In some implementations of the data transmission method provided in the first aspect and the second aspect, the performing initial clear channel assessment CCA detection on all the channels in the initial channel set includes:

performing the initial CCA detection on all the channels in the initial channel set by using an enhanced distributed channel access EDCA mechanism; and
before the determining an initial channel set, the method further includes:
determining at least one piece of initial data based on a priority corresponding to each of the at least one piece of to-be-transmitted initial data, where the priority of the initial data is one of a first priority, a second priority, a third priority, and a fourth priority in the EDCA mechanism, or a priority in a distributed coordination function DCF mechanism.

Optionally, the performing initial clear channel assessment CCA detection on all the channels in the initial channel set includes:

performing first CCA detection on all the channels in the initial channel set, and if a result of the first CCA detection is busy at a moment during the first CCA detection, stopping the first CCA detection and repeatedly performing second CCA detection on the initial channel set until a result of the second CCA detection is idle, and then continuing the first CCA detection until the first CCA detection ends.

In this application, when the NRU communications device performs the first CCA detection on the initial channel set, if the result of the first CCA detection at a moment is busy, the NRU communications device stops performing the first CCA detection on the initial channel set, and starts repeatedly performing the second CCA detection on the initial channel set until the result of the second CCA detection is idle, and then continues to perform the first CCA detection on the initial channel set, so as to effectively use a channel, thereby increasing the bandwidth of the channel that is used to transmit data, increasing data transmission efficiency, and being more applicable to an enhanced data offloading (eMBB offloading) scenario in an NRU.

The determining, as a target channel, a channel that is in the initial channel set and for which a result of the initial CCA detection is idle includes:

determining, as a target channel, a channel that is in the initial channel set and for which the result of the first CCA detection is idle in a preset time period before the first CCA detection ends; and
before the determining an initial channel set, the method further includes:
determining target data in at least one piece of initial data based on a priority corresponding to each of the at least one piece of to-be-transmitted initial data, where the priority of the initial data is one of a first priority, a second priority, a third priority, and a fourth priority in a listen before talk LBT mechanism.

Optionally, the repeatedly performing second CCA detection on the initial channel set until a result of the second CCA detection is idle, and then continuing the first CCA detection includes:
repeatedly performing the second CCA detection on all the channels in the initial channel set until the results of the second CCA detection for all the channels in the initial channel set are idle, and then continuing the first CCA detection.

Optionally, the initial channel set includes at least two channels, and the repeatedly performing second CCA detection on the initial channel set until a result of the second CCA detection is idle, and then continuing the first CCA detection includes:

obtaining a first subset of the initial channel set by using a dichotomy;
performing the second CCA detection on the first subset;
if a result of the second CCA detection for the first subset is idle, continuing the first CCA detection;
if the result of the second CCA detection for the first subset is busy, obtaining a second subset of the first subset by using the dichotomy;
performing the second CCA detection on the second subset;
if a result of the second CCA detection for the second subset is idle, continuing the first CCA detection;
if the result of the second CCA detection for the second subset is busy, determining whether the second subset consists of a channel of the initial channel set; and
if the second subset consists of a channel of the initial channel set, repeatedly performing the second CCA detection on the second subset until the result of the second CCA detection for the second subset is idle, and then continuing the first CCA detection.

Optionally, before the performing first CCA detection on all the channels in the initial channel set, the method further includes:

determining a quantity of channels in the initial channel set; and
determining a first threshold based on the quantity of channels in the initial channel set and according to a first threshold determining formula, where the first threshold determining formula is: $Y=X+3*\log_2 M$, Y is the first threshold, X is a threshold corresponding to a 20 MHz bandwidth channel, $\log_2 M$ is a logarithm of M with base 2, and M is a quantity of channels participating in CCA detection; and
the performing first CCA detection on all the channels in the initial channel set includes:
performing the first CCA detection on all the channels in the initial channel set by using the first threshold.

The threshold for the CCA detection determined in the related technology is not related to the quantity of channels participating in the CCA detection, and the threshold for the CCA detection cannot be applicable to different scenarios. All the thresholds for the initial CCA detection determined in this application are related to the quantity of channels participating in the CCA detection, in other words, the thresholds for the initial CCA detection determined in this application can be better adapted to different scenarios.

Optionally, before the determining a first threshold based on the quantity of channels in the initial channel set and according to a first threshold determining formula, the method further includes:

detecting whether an inter-RAT device exists within a preset range, where a distance between a device within the preset range and the communications device is less than a preset distance; and
if the inter-RAT device exists within the preset range, determining a second threshold based on the quantity of channels in the initial channel set and according to a second threshold determining formula, where the second threshold determining formula is:

$$X_{\text{Thresh\_max}} = \min \left\{ \begin{array}{l} T_{\max} + 10\,dB - 3*\log_2(\text{M}) - \sum I, \\ X_r \end{array} \right\};$$

the performing first CCA detection on all the channels in the initial channel set includes:

performing the first CCA detection on all the channels in the initial channel set by using the second threshold; and the determining a first threshold based on the quantity of channels in the initial channel set and according to a first threshold determining formula includes:

if the inter-RAT device does not exist within the preset range, determining the first threshold based on the quantity of channels in the initial channel set and according to the first threshold determining formula; where

$X_{\text{Thresh\_max}}$ is the second threshold, $\min \left\{ \begin{array}{l} T_{\max} + 10 - 3*\log 2(M) - \sum I, \\ X_r \end{array} \right\}$ is a minimum value

of $T_{\max}+10-3*\log2(M)-\sum I$ and $X_r$, $T_{max}=-75+10*\log_{10}BW$, $\log_{10}BW$ is a logarithm of BW with base 10, BW is a frequency bandwidth corresponding to the initial channel set, dB is decibel, $I$ is an interference value of the inter-RAT device, $\sum I$ is a sum of the interference values of all the inter-RAT devices within the preset range, and $X_r$ is a maximum allowed transmit threshold.

Optionally, a time period of the first CCA detection includes one fixed time interval of 16 μs and n slots of 9 μs, where n is an integer greater than or equal to zero.
Optionally, the preset time period is 9 μs or 25 μs.
According to a third aspect, a data transmission apparatus is provided, where the data transmission apparatus is used for a communications device and includes at least one module, and the at least one module is configured to implement the data transmission method according to the first aspect or any one of the possible implementations of the first aspect.
According to a fourth aspect, a data transmission apparatus is provided, where the data transmission apparatus is used for a communications device and includes at least one module, and the at least one module is configured to implement the data transmission method according to the second aspect or any one of the possible implementations of the second aspect.
According to a fifth aspect, a data transmission apparatus is provided, where the data transmission apparatus is used for a communications device and includes: at least one processor, at least one network interface, a memory, and at least one bus. The memory and the network interface are separately connected to the processor by using the bus. The processor is configured to execute an instruction stored in the memory; and the processor implements, by executing the instruction, the data transmission method according to the first aspect or any one of the possible implementations of the first aspect.
According to a sixth aspect, a data transmission apparatus is provided, where the data transmission apparatus is used for a communications device and includes: at least one processor, at least one network interface, a memory, and at least one bus. The memory and the network interface are separately connected to the processor by using the bus. The processor is configured to execute an instruction stored in the memory; and the processor implements, by executing the instruction, the data transmission method according to the second aspect or any one of the possible implementations of the second aspect.
According to a seventh aspect, a data transmission system is provided, where the data transmission system includes a communications device, and the communications device includes the data transmission apparatus according to the third aspect, the fourth aspect, the fifth aspect, or the sixth aspect.

According to an eighth aspect, a computer readable storage medium is provided, where the computer readable storage medium stores an instruction, and when the computer readable storage medium runs on a computer, the computer is enabled to perform the method according to the first aspect or the second aspect.

According to a ninth aspect, a computer program product that includes an instruction is provided, where when the computer program product runs on a computer, the computer is enabled to perform the method according to the first aspect or the second aspect.

Technical effects obtained in the third aspect to the ninth aspect are similar to technical effects obtained by a corresponding technical means in the first aspect and the second aspect. Details are not described herein again.

In conclusion, this application provides a data transmission method, apparatus, and system. In the data transmission method, after determining all the channels that can be currently accessed, and determining the target channel for which the result of the initial CCA detection is idle, the communications device performs the auxiliary CCA detection on the preset channel again, and transmits the target data on the target channel only when the result of the auxiliary CCA detection is idle. In other words, after determining the target channel for transmitting data, the NRU communications device needs to detect whether the 802.11 communications device transmits data on the high bandwidth channel corresponding to the same frequency, and data is transmitted on the target channel only when the 802.11 communications device does not transmit data on the high bandwidth channel of the same frequency, thereby effectively avoiding conflict between the NRU communications device and the 802.11 communications device when transmitting the target data, and implementing mutual compatibility between the NRU communications device and the 802.11 communications device.

It should be understood that the foregoing general description and the following detailed description are merely an example for explanation, and do not limit this application.

## BRIEF DESCRIPTION OF DRAWINGS

FIG. 1 is a schematic diagram of a data transmission scenario according to an embodiment of the present invention;
FIG. 2 is a schematic structural diagram of a data transmission apparatus according to an embodiment of the present invention;
FIG. 3 is a method flowchart of a data transmission method according to an embodiment of the present invention;
FIG. 4 is a method flowchart of another data transmission method according to an embodiment of the present invention;
FIG. 5 is a schematic diagram of CCA detection according to an embodiment of the present invention;
FIG. 6 is another schematic diagram of CCA detection according to an embodiment of the present invention;
FIG. 7 is still another schematic diagram of CCA detection according to an embodiment of the present invention;
FIG. 8 is yet another schematic diagram of CCA detection according to an embodiment of the present invention;
FIG. 9 is a schematic diagram of another data transmission scenario according to an embodiment of the present invention;
FIG. 10 is a method flowchart of still another data transmission method according to an embodiment of the present invention;
FIG. 11 is a schematic structural diagram of another data transmission apparatus according to an embodiment of the present invention;
FIG. 12 is a schematic structural diagram of still another data transmission apparatus according to an embodiment of the present invention;
FIG. 13 is a schematic structural diagram of yet another data transmission apparatus according to an embodiment of the present invention;
FIG. 14 is a schematic structural diagram of a data transmission apparatus according to another embodiment of the present invention;
FIG. 15 is a schematic structural diagram of another data transmission apparatus according to another embodiment of the present invention;
FIG. 16 is a schematic structural diagram of still another data transmission apparatus according to another embodiment of the present invention;
FIG. 17 is yet another schematic structural diagram of yet another data transmission apparatus according to another embodiment of the present invention; and
FIG. 18 is a schematic structural diagram of a data transmission apparatus according to another embodiment of the present invention.

**DESCRIPTION OF EMBODIMENTS**

To make the objectives, technical solutions, and advantages of this application clearer, the following further describes the implementations of this application in detail with reference to the accompanying drawings.

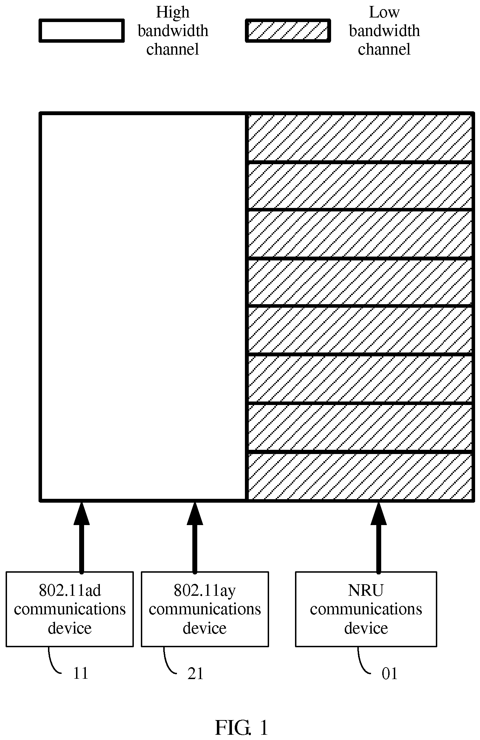

FIG. 1 is a schematic diagram of a data transmission scenario according to an embodiment of the present invention. As shown in FIG. 1, an NRU communications device 01 may transmit data on a low bandwidth (for example, a bandwidth of 200 megahertz) channel corresponding to 60 GHz; an 802.11ad communications device 11 may transmit data on a high bandwidth (for example, a bandwidth of 2.16 GHz) channel corresponding to 60 GHz; and an 802.11ay communications device 21 may transmit data on the high bandwidth (for example, the bandwidth of 2.16 GHz) channel corresponding to 60 GHz. In actual application, a bandwidth of a channel for transmitting data by the NRU communications device 01 may also be another bandwidth less than 2.16 GHz. This is not limited in this embodiment of the present invention.

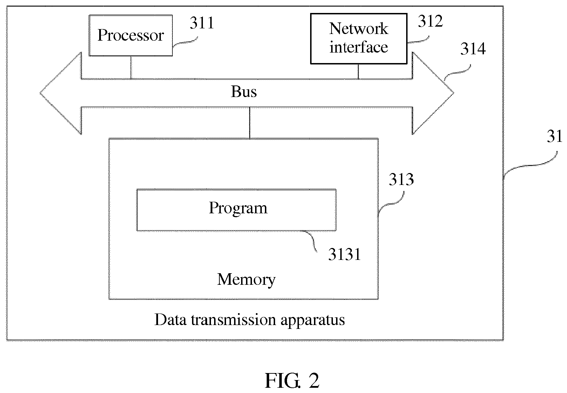

As shown in FIG. 2, an embodiment of the present invention provides a data transmission apparatus 31, where the data transmission apparatus 31 may be used for an NRU communications device. The data transmission apparatus 31 may include at least one processor 311 (for example, a central processing unit), at least one network interface 312, a memory 313, and at least one bus 314, configured to implement connection and communication between these apparatuses. The memory 313 and the network interface 312 may be separately connected to the processor 311 by using the bus 314. The processor 311 is configured to perform an executable module stored in the memory 313, for example, a computer program. The memory 313 may include a high-speed random access memory (Random Access Memory, RAM), or may further include a non-volatile memory (non-volatile memory), for example, at least one disk memory. Connection and communication between the data transmission apparatus and at least one of other network elements are implemented through the at least one network interface 312 (which may be wired or wireless), for example, by using the Internet, a wide area network, a local area network, or a metropolitan area network. In some implementations, the memory 313 stores a program 3131, and the program 3131 can be executed by the processor 311.

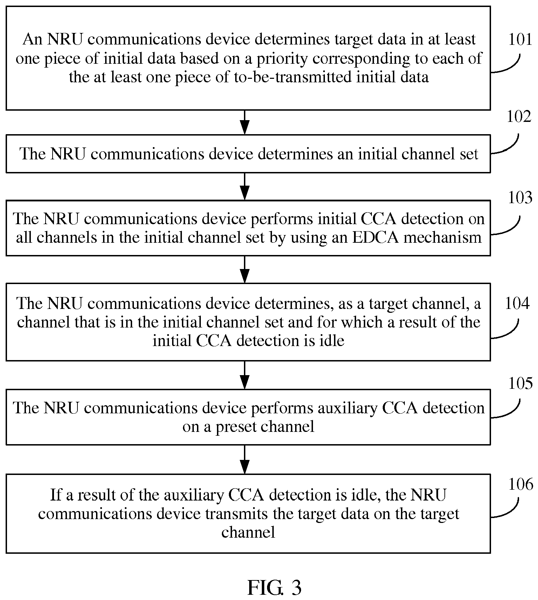

As shown in FIG. 3, an embodiment of the present invention provides a data transmission method. The data transmission method may be used for a communications device, and the communications device may be an NRU communications device 01 in FIG. 1. The data transmission method may be implemented by a processor 311 in FIG. 2 by executing a program 3131. The data transmission method may include the following steps.

Step 101. An NRU communications device determines target data in at least one piece of initial data based on a priority corresponding to each of the at least one piece of to-be-transmitted initial data.

For example, the NRU communications device may store a one-to-one correspondence between a plurality of data types and a plurality of priorities, in other words, in a one-to-one correspondence stored in the NRU communications device, each data type may be corresponding to one priority. After determining one piece of to-be-transmitted initial data, the NRU communications device may determine, based on a data type of the initial data and the one-to-one correspondence stored in the NRU communications device, a priority corresponding to the initial data, then determine the priority of each of the at least one piece of to-be-transmitted initial data, and determine the target data based on the priority of each of the at least one piece of to-be-transmitted initial data.

Specifically, the NRU communications device may determine, as the target data, initial data corresponding to a highest priority in the at least one piece of initial data; or the NRU communications device may determine, as the target data, initial data corresponding to a lowest priority in the at least one piece of initial data; or the NRU communications device may determine, as the target data according to a preset rule, initial data for which a corresponding priority meets a preset condition and that is in the at least one piece of initial data. In actual application, the NRU communications device may further determine, in another manner, one piece of initial data in the at least one of initial data as the target data. This is not limited in this embodiment of the present invention.

Further, the priority recorded in the one-to-one correspondence stored in the NRU communications device may include: a first priority, a second priority, a third priority, and a fourth priority in an enhanced distributed channel access (Enhanced distributed channel access, EDCA) mechanism, and a priority in a distributed coordination function (Distributed coordination function, DCF) mechanism. The priority corresponding to one piece of initial data in the at least one piece of initial data may be one priority of the first priority, the second priority, the third priority, and the fourth priority in the EDCA mechanism, or the priority in the DCF mechanism.

Specifically, the first priority in the EDCA mechanism may be an AC-VI (Access category video) priority in the EDCA mechanism, a minimum contention window (Minimum contention window, CWmin) value in the first priority may be 7, a maximum contention window (Maximum contention window, CWmax) value may be 15, an arbitrary inter-frame space number (Arbitrary inter-frame space number, AIDSN) value may be 2, and a transmission opportunity limit (Transmission opportunity limit, TXOP limit) value may be 1.504 ms (millisecond); the second priority in the EDCA mechanism may be an AC-VO (Access category voice) priority in the EDCA mechanism, a CWmin value in the second priority may be 15, a CWmax value may be 31, an AIDSN value may be 2, and a TXOP limit value may be 3.008 ms.

The third priority in the EDCA mechanism may be an AC-BE (Access category best effort) priority in the EDCA mechanism, a CWmin value in the third priority may be 31, a CWmax value may be 1023, an AIDSN value may be 3, and a TXOP limit value may be 0. The fourth priority in the EDCA mechanism may be an AC-BK (Access category background) priority in the EDCA mechanism, a CWmin value in the fourth priority may be 31, a CWmax value may be 1023, an AIDSN value may be 7, and a TXOP limit value may be 0.

Step 102. The NRU communications device determines an initial channel set.

After determining the target data in the at least one piece of to-be-transmitted initial data, the NRU communications device may determine all channels that the NRU communications device can currently access, and further determine the initial channel set based on all the channels that the NRU communications device can currently access, where the initial channel set may include all the channels that the NRU communications device can currently access. It should be noted that, for a specific step in which the NRU communications device determines the channel that can be currently accessed, refer to a specific step in which the communications device determines the channel that can be currently accessed in the related technology. Details are not described in this embodiment of the present invention. For example, each channel in the initial channel set mentioned in step 102 may be a channel corresponding to a frequency of 60 GHz and a bandwidth of 200 MHz, and a bandwidth of each channel in the initial channel set may also be another bandwidth less than 2.16 GHz except the bandwidth of 200 MHz. This is not limited in this embodiment of the present invention.

Step 103. The NRU communications device performs initial CCA detection on all channels in the initial channel set by using an EDCA mechanism.

For example, after determining the initial channel set, the NRU communications device may perform the initial CCA detection on all the channels in the initial channel set by using the EDCA mechanism, that is, perform the initial CCA detection on each channel corresponding to the frequency of 60 GHz and the bandwidth of 200 MHz in the initial channel set. For a specific step of the initial CCA detection, refer to a CCA detection step in the EDCA mechanism. Details are not described in this embodiment of the present invention. Specifically, the NRU communications device performs the initial CCA detection on the initial channel set to determine whether signal energy on the initial channel set exceeds a threshold for the initial CCA detection. If the signal energy on the initial channel set exceeds the threshold for the initial CCA detection, the NRU communications device may consider that another device is in communication in the initial channel set. If the signal energy on the initial channel set does not exceed the threshold for the initial CCA detection, the NRU communications device may consider that no other device is in communication in the initial channel set.

Step 104. The NRU communications device determines, as a target channel, a channel that is in the initial channel set and for which a result of the initial CCA detection is idle.

After the initial CCA detection is performed on each channel in the initial channel set, a result of the initial CCA detection for each channel may be obtained. For example, the result of the initial CCA detection for each initial channel may be busy or idle. In step 104, the NRU communications device may determine, as the target channel based on the result of the initial CCA detection for each channel in the initial channel set, the channel for which the result of the initial CCA detection is idle.

For example, as shown in Table 1, if the initial channel set includes a channel 1, a channel 2, a channel 3, and a channel 4, a result of the initial CCA detection for the channel 1 is idle, a result of the initial CCA detection for the channel 2 is busy, a result of the initial CCA detection for the channel 3 is idle, and a result of the initial CCA detection for the channel 4 is busy, in step 103, the NRU communications device may determine that the target channel in the initial channel set is the channel 1 and the channel 3.

**Table 1**

| Channel in the initial channel set | Result of initial CCA detection |
|---|---|
| Channel 1 | Idle |
| Channel 2 | Busy |
| Channel 3 | Idle |
| Channel 4 | Busy |

Step 105. The NRU communications device performs auxiliary CCA detection on a preset channel.

For example, the preset channel may be a channel used by an 802.11ad communications device or an 802.11ay communications device to transmit data in the related technology, in other words, a frequency corresponding to the preset channel may be 60 GHz, and the bandwidth of the preset channel may be 2.16 GHz, and each channel in the initial channel set may be a subchannel of the preset channel.

After the target channel is determined, the auxiliary CCA detection further needs to be performed on the preset channel, and whether a result of the auxiliary CCA detection for the preset channel is busy is determined, that is, to detect whether the 802.11ad communications device or the 802.11ay communications device transmits data on the preset channel. If the result of the auxiliary CCA detection for the preset channel is busy, it may be determined that the 802.11ad communications device or the 802.11ay communications device transmits data on the preset channel. If the result of the auxiliary CCA detection for the preset channel is idle, it may be determined that no 802.11ad communications device or 802.11ay communications device transmits data on the preset channel.

Step 106. If a result of the auxiliary CCA detection is idle, the NRU communications device transmits the target data on the target channel.

If the result of the auxiliary CCA detection for the preset channel is idle, the NRU communications device may determine that no 802.11ad communications device or 802.11ay communications device transmits data on the preset channel. In this case, if the NRU communications device transmits data on the subchannel (for example, the target channel) of the preset channel, the NRU communications device does not collide with the 802.11ad communications device or the 802.11ay communications device, so that the target data can be transmitted relatively smoothly. Therefore, when the result of the auxiliary CCA detection for the preset channel is idle, the NRU communications device may transmit the target data on the target channel.

In step 105, if the result of the auxiliary CCA detection for the preset channel is busy, the NRU communications device may determine that the 802.11ad communications device or the 802.11ay communications device transmits data on the preset channel. In this case, if the NRU communications device transmits data on the subchannel (for example, the target channel) of the preset channel, the NRU communications device may collide with the 802.11ad communications device or the 802.11ay communications device, and consequently the target data cannot be transmitted smoothly. Therefore, when the result of the auxiliary CCA detection for the preset channel is busy, the NRU communications device cannot transmit the target data, and the NRU communications device may repeatedly perform step 105 until the result of the auxiliary CCA detection for the preset channel is idle, and then transmit the target data on the target channel.

For example, if the NRU communications device that needs to transmit data in this embodiment of the present invention is the NRU communications device 01 in FIG. 1, and the NRU communications device 01 needs to transmit target data, after determining that the result of the auxiliary CCA detection for the preset channel is idle, the NRU communications device 01 may determine that an 802.11ad communications device 11 in FIG. 1 does not transmit data at this time, and an 802.11ay communications device 21 in FIG. 1 does not transmit data at this time. In this case, the NRU communications device may transmit the target data on the target channel. In other words, in this embodiment of the present invention, the NRU communications device can transmit data on a channel corresponding to a relatively high frequency (for example, 60 GHz), thereby greatly improving data transmission efficiency, and can be compatible with an existing 802.11ad communications device and an existing 802.11ay communications device.

In conclusion, in the data transmission method provided in this embodiment of the present invention, after determining all the channels that can be currently accessed, and determining the target channel for which the result of the initial CCA detection is idle, the communications device performs the auxiliary CCA detection on the preset channel again, and transmits the target data on the target channel only when the result of the auxiliary CCA detection is idle. In other words, after determining the target channel for transmitting data, the NRU communications device needs to detect whether the 802.11 communications device transmits data on a high bandwidth channel corresponding to the same frequency, and transmits data on the target channel only when the 802.11 communications device does not transmit data on the high bandwidth channel of the same frequency, thereby effectively avoiding conflict between the NRU communications device and the 802.11 communications device when transmitting the target data, and implementing mutual compatibility between the NRU communications device and the 802.11 communications device.

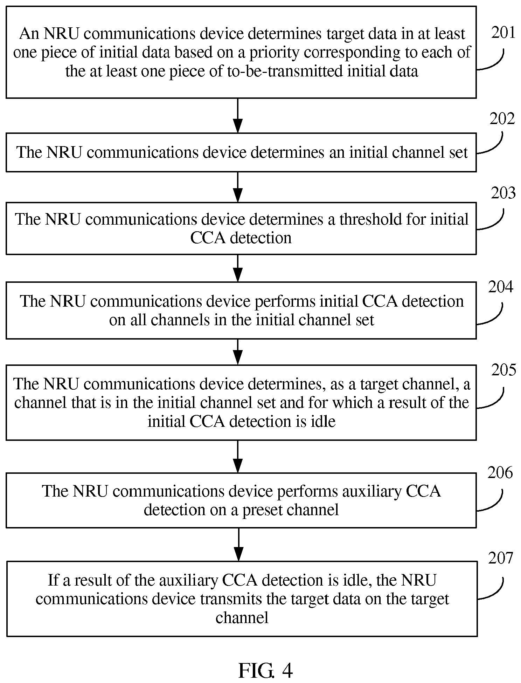

As shown in FIG. 4, an embodiment of the present invention provides another data transmission method. The data transmission method may be used for a communications device, and the communications device may be an NRU communications device 01 in FIG. 1. The data transmission method may be implemented by a processor 311 in FIG. 2 by executing a program 3131. The data transmission method may include the following steps.

Step 201. An NRU communications device determines target data in at least one piece of initial data based on a priority corresponding to each of the at least one piece of to-be-transmitted initial data.

For example, the NRU communications device may store a one-to-one correspondence between a plurality of data types and a plurality of priorities, in other words, in a one-to-one correspondence stored in the NRU communications device, each data type may be corresponding to one priority. After determining one piece of to-be-transmitted initial data, the NRU communications device may determine, based on a data type of the initial data and the one-to-one correspondence stored in the NRU communications device, a priority corresponding to the initial data, then determine the priority of each of the at least one piece of to-be-transmitted initial data, and determine the target data based on the priority of each of the at least one piece of to-be-transmitted initial data.

Further, the priority recorded in a one-to-one correspondence stored in the NRU communications device may include: a first priority, a second priority, a third priority, and a fourth priority in a listen before talk (listen before talk, LBT) mechanism. The priority corresponding to one piece of initial data in the at least one piece of initial data may be one priority of the first priority, the second priority, the third priority, and the fourth priority in the LBT mechanism.

Specifically, in the first priority in the LBT mechanism, a fixed backoff timeslot quantity ($m_p$) value may be 1, a CWmin value may be 3, a CWmax value may be 7, a TXOP limit value may be 2 ms, and allowed CWp sizes (allowed $CW_p$ sizes) may be {3, 7}; in the second priority in the LBT mechanism, an $m_p$ value may be 1, a CWmin value may be 7, a CWmax value may be 15, a TXOP limit value may be 3 ms, and allowed $CW_p$ sizes may be {7, 15}; in the third priority in the LBT mechanism, an $m_p$ value may be 3, a CWmin value may be 15, a CWmax value may be 63, a TXOP limit value may be 8 ms or 15 ms, and allowed $CW_p$ sizes may be {15, 31, 63}; in the fourth priority in the LBT mechanism, an $m_p$ value may be 7, a CWmin value may be 15, a CWmax value may be 1023, a TXOP limit value may be 8 ms or 15 ms, and allowed $CW_p$ sizes may be {15, 31, 63, 127, 255, 511, 1023}.

Step 202. The NRU communications device determines an initial channel set.

For example, for a specific step of determining the initial channel set by the NRU communications device in step 202, refer to a specific step of determining the initial channel set by the NRU communications device in step 102 in the foregoing embodiment, and details are not described herein in this embodiment of the present invention.

Step 203. The NRU communications device determines a threshold for initial CCA detection.

After determining the initial channel set, the NRU communications device may determine a quantity of channels in the initial channel set, and detect whether an inter-RAT device exists within a preset range. For example, the inter-RAT device may be an 802.11ad communications device or an 802.11ay communications device in a licensed-assisted access (licensed-assisted access, LAA) system. In other words, the NRU communications device may detect whether the inter-RAT device (such as the 802.11ad communications device or the 802.11ay communications device) that has a same frequency as a channel for transmitting data of the NRU communications device exists within a preset range. It should be noted that a distance between the device within the preset range and the NRU communications device is less than a preset distance.

On one hand, if no inter-RAT device exists within the preset range, the NRU communications device may determine a first threshold based on the quantity of channels in the initial channel set and according to a first threshold determining formula, and use the first threshold as the threshold for the initial CCA detection. Specifically, the first threshold determining formula may be: $Y=X+3*\log_2 M$, where Y is the first threshold, X is a threshold corresponding to a channel whose bandwidth is 20 MHz (megahertz), $\log_2 M$ is a logarithm of M with base 2, and M is a quantity of channels participating in CCA detection.

On the other hand, if the NRU communications device detects that an inter-RAT device exists within the preset range, the NRU communications device may determine a second threshold based on the quantity of channels in the initial channel set and according to a second threshold determining formula, and use the second threshold as the threshold for the initial CCA detection. Specifically, the second threshold determining formula may be:

$$X_{\text{Thresh\_max}} = \min \left\{ \begin{array}{l} T_{\max} + 10\,dB - 3*\log_2(\text{M}) - \sum I, \\ X_r \end{array} \right\} \quad \text{where}$$

$X_{\text{Thresh\_max}}$ is the second threshold, $\min \left\{ \begin{array}{l} T_{\max} + 10 - 3*\log 2(M) - \sum I, \\ X_r \end{array} \right\}$ is a minimum value of

$T_{\max}+10-3*\log2(M)-\sum I$ and $X_r$, $T_{max}=-75+10*\log_{10}BW$, BW is a frequency bandwidth corresponding to the initial channel set, dB is decibel, $I$ is an interference value of the inter-RAT device, $\sum I$ is a sum of the interference values of all the inter-RAT devices within the preset range, $X_r$ is a maximum allowed transmit threshold (namely, a maximum allowed transmit threshold specified by relevant laws), and M is the quantity of channels participating in the CCA detection.

In a related technology, the threshold for the CCA detection may be determined by using the following formula:

$$X_{\text{T}} = \min \left\{ \begin{array}{l} T_{\max} + 10\,dB, \\ X_r \end{array} \right\} = -52dBm, \quad$$ where $X_T$ is the threshold for the CCA detection determined in the related technology, Xr is the maximum allowed transmit threshold, $T_{\max}$ (dBm) $=-75$dBm/MHz$+ 10\log_{10}(BW)$, dBm is decibel-milliwatt, MHz is megahertz, and $\log_{10}(BW)$ is a logarithm of BW with base 10.

In other words, the threshold for the CCA detection determined in the related technology is not related to the quantity of channels participating in the CCA detection, and the threshold for the CCA detection cannot be applicable to different scenarios. All the thresholds for the initial CCA detection determined in step 203 are related to the quantity of channels participating in the CCA detection, in other words, the threshold for the initial CCA detection determined in this embodiment of the present invention can be better adapted to different scenarios.

Step 204. The NRU communications device performs initial CCA detection on all channels in the initial channel set.

If the threshold for the initial CCA detection determined in step 203 is the first threshold, the NRU communications device in step 204 may perform the initial CCA detection on all the channels in the initial channel set by using the first threshold. If the threshold for the initial CCA detection determined in step 203 is the second threshold, the NRU communications device in step 204 may perform the initial CCA detection on all the channels in the initial channel set by using the second threshold. For example, the initial CCA detection may include only first CCA detection, or the initial CCA detection may include the first CCA detection and second CCA detection.

For example, when the NRU communications device performs the initial CCA detection on all the channels in the initial channel set by using the threshold for the initial CCA detection determined in step 203, the NRU communications device may first perform the first CCA detection on all the channels in the initial channel set. If a result of the first CCA detection for the initial channel set is busy at a moment during the first CCA detection, the NRU communications device stops performing the first CCA detection on the initial channel set, and repeatedly performs the second CCA detection on the initial channel set until a result of the second CCA detection for the initial channel set is idle, and then continues the first CCA detection until the first CCA detection ends. It should be noted that, thresholds used in the first CCA detection and the second CCA detection may be the thresholds determined in step 203.

The NRU communications device may perform the first CCA detection of one period on the initial channel set, where the time period of the first CCA detection may include one fixed time interval (Td) of 16 μs (microseconds) and n slots (slot) of 9 μs, where n is an integer greater than or equal to zero. In other words, the NRU communications device may perform LBT backoff of Td+n*slot (one period) on the initial channel set, perform the first CCA detection on the initial channel set within the Td+n*slot, and start counting by using a backoff counter at the beginning of performing the first CCA detection on the initial channel set. When a number currently recorded by the backoff counter is 0, the NRU communications device may determine that a time period of the first CCA detection ends at this time.

If the result of the first CCA detection for the initial channel set is busy at a moment in the process of performing the first CCA detection on the initial channel set by the NRU communications device, the backoff counter stops counting, and the NRU communications device needs to repeatedly perform the second CCA detection on the initial channel set. A time period of the second CCA detection may also include one fixed time interval (Td) of 16 μs (microseconds) and n slots (slot) of 9 μs, where n is an integer greater than or equal to zero, and a quantity n of slots in the period of the second CCA detection and a quantity n of slots in the period of the first CCA detection may be different. If the result of the second CCA detection for the initial channel set is idle at a moment, the NRU communications device may start the first CCA detection on the initial channel set, in other words, the backoff counter may be controlled to continue counting, and the first CCA detection may continue to be performed on the initial channel set.

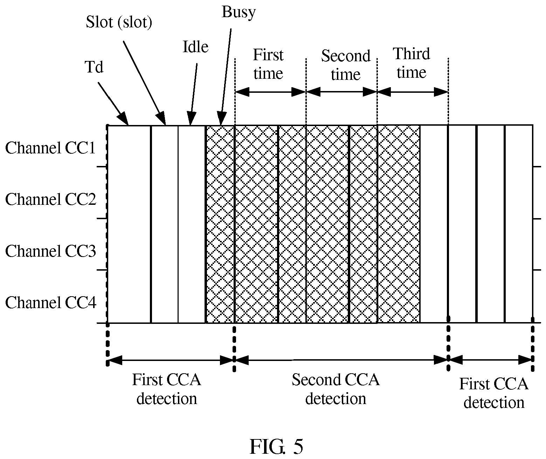

On one hand, as shown in FIG. 5, the initial channel set may include a channel CC1, a channel CC2, a channel CC3, and a channel CC4. In a process of performing the first CCA detection on all the channels in the initial channel set, if the result of the first CCA detection is busy at a moment, the NRU communications device needs to stop performing the first CCA detection on the initial channel set, and start repeatedly performing the second CCA detection on the initial channel set. When the NRU communications device repeatedly performs the second CCA detection on the initial channel set, the NRU communications device may repeatedly perform the second CCA detection on all the channels in the initial channel set, in other words, the NRU communications device may perform the second CCA detection on the initial channel set (including the channel CC1, the channel CC2, the channel CC3, and the channel CC4) for the first time. If a result of the second CCA detection for the first time is busy, the NRU communications device needs to perform the second CCA detection on the initial channel set (including the channel CC1, the channel CC2, the channel CC3, and the channel CC4) for the second time. If a result of the second CCA detection for the second time is busy, the NRU communications device needs to perform the second CCA detection on the initial channel set for the third time, and repeats this cycle until the result of the second CCA detection for all the channels in the initial channel set is idle, and then continues the first CCA detection.

On the other hand, the initial channel set may include at least two channels. When the NRU communications device repeatedly performs the second CCA detection on the initial channel set, the NRU communications device may obtain a first subset of the initial channel set by using a dichotomy, and perform the second CCA detection on the first subset. If a result of the second CCA detection for the first subset is idle, the first CCA detection continues to be performed on the initial channel set; if the result of the second CCA detection for the first subset is busy, the dichotomy is used to obtain a second subset of the first subset, and the second CCA detection is performed on the second subset; if a result of the second CCA detection for the second subset is idle, the first CCA detection continues; if the result of the second CCA detection for the second subset is busy, it needs to be determined whether the second subset consists of a channel of the initial channel set; if the second subset consists of a channel of the initial channel set, the second CCA detection is repeatedly performed on the second subset until the result of the second CCA detection for the second subset is idle, and then the first CCA detection continues.

If the initial channel set includes P channels, and the result of the first CCA detection at a moment in the process of performing the first CCA detection on the initial channel set by the NRU communications device is busy, the dichotomy is used to select P/2 channels from the P channels, and the second CCA detection is performed on the P/2 channels. It should be noted that, in this time, a quantity of channels participating in the second CCA detection is P/2, and in this case, a threshold for the second CCA detection varies according to the quantity of channels participating in the CCA detection. If results of the second CCA detection for the P/2 channels are idle, the first CCA detection continues to be performed on the initial channel set; if the results of the second CCA detection for the P/2 channels are still busy, the dichotomy is used to select P/4 channels from the P/2 channels, and the foregoing step is repeated until the only subset obtained by using the dichotomy includes only one channel (the channel may be a channel whose bandwidth is 20 MHz), and the second CCA detection is repeatedly performed on the channel until a result of the second CCA detection for the channel is idle, and then the first CCA detection continues.

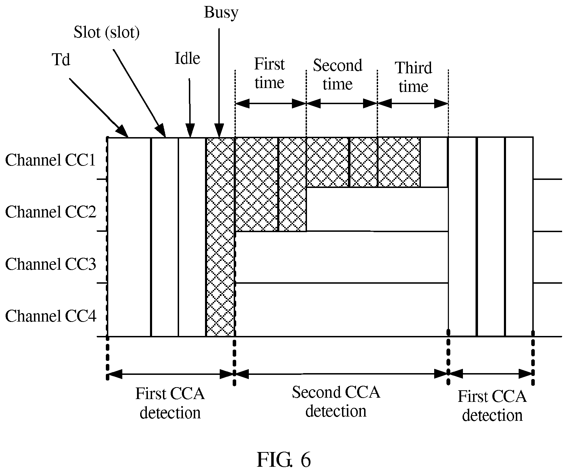

As shown in FIG. 6, the initial channel set may include the channel CC1, the channel CC2, the channel CC3, and the channel CC4, and each channel is the channel whose bandwidth is 20 MHz, or a channel whose bandwidth is 200 MHz, or another channel whose bandwidth is less than 2.16 GHz. When the result of the first CCA detection at a moment in the process of performing the first CCA detection on all the channels in the initial channel set by the NRU communications device is busy, two channels (such as the channel CC1 and the channel CC2) are selected from the foregoing four channels by using the dichotomy, and the second CCA detection is performed on the selected two channels, in other words, the second CCA detection is performed on the initial channel set for the first time. If results of the second CCA detection for the two channels are still busy, the dichotomy is used to select one channel (for example, the channel CC1) from the two channels. In this case, because only one channel is obtained by using the dichotomy, the NRU communications device needs to repeatedly perform the second CCA detection on the channel CC1 until a result of the second CCA detection for the channel CC1 is idle, and then continue to perform the first CCA detection. It is assumed that a result of the second CCA detection for the channel CC1 for the first time (namely, the result of the second CCA detection for the initial channel set for the second time) is busy, and a result of the second CCA detection for the channel CC1 for the second time (namely, the result of the second CCA detection for the initial channel set for the third time) is idle, the first CCA detection continues to be performed on the initial channel set.

Step 205. The NRU communications device determines, as a target channel, a channel that is in the initial channel set and for which a result of the initial CCA detection is idle.

Specifically, after the initial CCA detection performed on the initial channel set by the NRU communications device ends, in other words, after the first CCA detection performed on the initial channel set ends, a channel that is in the initial channel set and for which a result of the first CCA detection is idle in a preset time period before the first CCA detection ends may be determined as the target channel. For example, the preset time period before the first CCA detection ends may be 9 μs or 25 μs. Optionally, the preset time period may be another time interval. This is not limited in this embodiment of the present invention.

Step 206. The NRU communications device performs auxiliary CCA detection on a preset channel.

For example, for a specific step of performing the auxiliary CCA detection on the preset channel by the NRU communications device in step 206, refer to a specific step of performing the auxiliary CCA detection on the preset channel by the NRU communications device in step 105 in the foregoing embodiment, and details are not described herein in this embodiment of the present invention.

Step 207. If a result of the auxiliary CCA detection is idle, the NRU communications device transmits the target data on the target channel.

For example, for a specific step of transmitting the target data on the target channel by the NRU communications device in step 207, refer to a specific step of transmitting the target data on the target channel by the NRU communications device in step 106 in the foregoing embodiment, and details are not described herein in this embodiment of the present invention.

If the result of the auxiliary CCA detection in step 206 is busy, the NRU communications device needs to repeatedly perform step 206 until the result of the auxiliary CCA detection is idle.

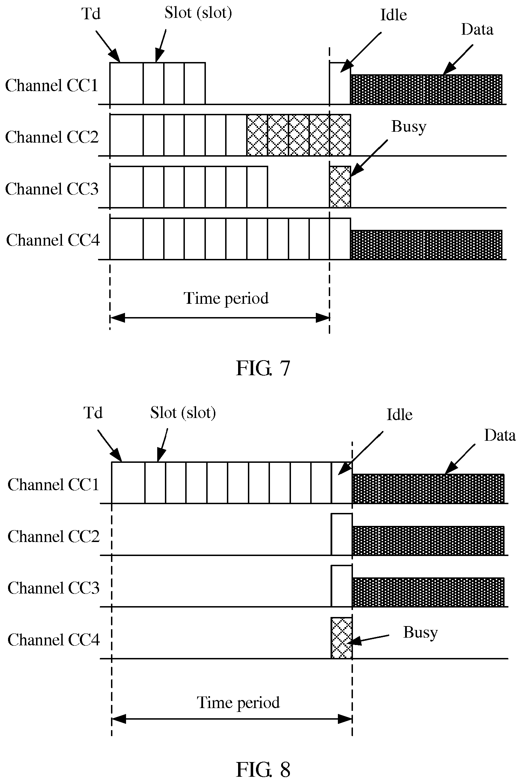

As shown in FIG. 7, in the related technology, after a transmit end determines a plurality of channels (the plurality of channels including the channel CC1, the channel CC2, the channel CC3, and the channel CC4 are used as an example in FIG. 7) that can be currently accessed, the transmit end may first randomly determine a quantity of slots of each channel, and perform the CCA detection on the channel within a time period (including one fixed time interval Td and n slots of each channel, where n is the quantity of slots of the channel), so as to determine whether a status of the channel is idle or busy. It should be noted that, the quantities of slots of all the channels that are randomly determined by the transmit end may be different. Therefore, after the CCA detection on a channel is completed, it is still necessary to wait for the CCA detection on another channel until the CCA detection on all the channels is completed. Then, a channel (for example, the channel CC1, the channel CC3, and the channel CC4 in FIG. 7) for which the result of the CCA detection at all moments in the process of the CCA detection is idle is used as a first channel, and a channel (for example, the channel CC2 in FIG. 7) for which the result of the CCA detection at at least one moment in the process of the CCA detection is busy is used as a second channel. Finally, the CCA detection needs to be performed again on each first channel in an extra timeslot, and data is transmitted on a first channel (for example, the channel CC1 and the channel CC4 in FIG. 7) for which a result of the CCA detection in the extra timeslot is idle, and data transmission is not allowed on the second channel (for example, the channel CC2 in FIG. 7) and a first channel (for example, the channel CC3 in FIG. 7) for which the result of the CCA detection in the extra timeslot is busy. It should be noted that the extra timeslot may be a timeslot after all the CCA detection is completed.

In the related technology, the transmit end is not allowed to transmit data on the second channel and the first channel for which the result of the CCA detection in the extra timeslot is busy, and when data is transmitted on the first channel, a channel on which data transmission is not allowed may be in an idle state, so that a bandwidth of a channel that is used to transmit data is relatively low, and consequently, data transmission efficiency is relatively low. In this embodiment of the present invention, when the NRU communications device performs the first CCA detection on the initial channel set, if the result of the first CCA detection at a moment is busy, the NRU communications device stops performing the first CCA detection on the initial channel set, and starts repeatedly performing the second CCA detection on the initial channel set until the result of the second CCA detection is idle, and then continues to perform the first CCA detection on the initial channel set. This can effectively use the second channel and the first channel for which the result of the CCA detection in the extra timeslot is busy in the related technology, thereby increasing the bandwidth of the channel that is used to transmit data, increasing data transmission efficiency, and being more applicable to an enhanced data offloading (eMBB offloading) scenario in an NRU.

As shown in FIG. 8, in the related technology, after the transmit end determines the plurality of channels (the plurality of channels including the channel CC1, the channel CC2, the channel CC3, and the channel CC4 are used as an example in FIG. 8) that can be currently accessed, the transmit end may first randomly determine a quantity of slots of one channel (for example, the channel CC1) in the plurality of channels, and perform the CCA detection on the channel (the channel CC1) within a time period (including one fixed time interval Td and n slots of the channel, where n is the quantity of slots of the channel, and n is 9 in FIG. 8), so as to determine whether the status of the channel is idle or busy. If a result of the CCA detection for the channel is idle in the process of the CCA detection, all the channels further need to be rechecked in a last slot of the n slots to determine whether the result of the CCA detection for each channel in the last slot is idle or busy. If the result of the CCA detection for a third channel (for example, the channel CC1, the channel CC2, and the channel CC3) in all the channels in the last slot is idle, and the result of the CCA detection for a fourth channel (for example, the channel CC4) in all the channels in the last slot is busy, data may be transmitted on the third channel (for example, the channel CC1, the channel CC2, and the channel CC3), and data transmission is not allowed on the fourth channel (for example, the channel CC4).

In the related technology, a transmit end is not allowed to transmit data on the fourth channel, and when data is transmitted on a third channel, the channel on which data transmission is not allowed may be in an idle state, so that the bandwidth of the channel that is used to transmit data is relatively low, and consequently, data transmission efficiency is relatively low. In this embodiment of the present invention, when the NRU communications device performs the first CCA detection on the initial channel set, if the result of the first CCA detection at a moment is busy, the NRU communications device stops performing the first CCA detection on the initial channel set, and starts repeatedly performing the second CCA detection on the initial channel set until the result of the second CCA detection is idle, and then continues to perform the first CCA detection on the initial channel set. This can effectively use the fourth channel in the related technology, thereby increasing the bandwidth of the channel that is used to transmit data, increasing data transmission efficiency, and being more applicable to the eMBB offloading scenario in an NRU.

In other words, in this embodiment of the present invention, the NRU communications device can transmit data on a channel of a relatively high bandwidth corresponding to a relatively high frequency (for example, 60 GHz), thereby greatly improving data transmission efficiency and being applicable to the eMBB offloading scenario, and can be compatible with an existing 802.11ad communications device and an existing 802.11ay communications device.

In conclusion, in the data transmission method provided in this embodiment of the present invention, after determining all the channels that can be currently accessed, and determining the target channel for which the result of the initial CCA detection is idle, the communications device performs the auxiliary CCA detection on the preset channel again, and transmits the target data on the target channel only when the result of the auxiliary CCA detection is idle. In other words, after determining the target channel for transmitting data, the NRU communications device needs to detect whether the 802.11 communications device transmits data on a high bandwidth channel corresponding to the same frequency, and transmits data on the target channel only when the 802.11 communications device does not transmit data on the high bandwidth channel of the same frequency, thereby effectively avoiding conflict between the NRU communications device and the 802.11 communications device when transmitting the target data, and implementing mutual compatibility between the NRU communications device and the 802.11 communications device.

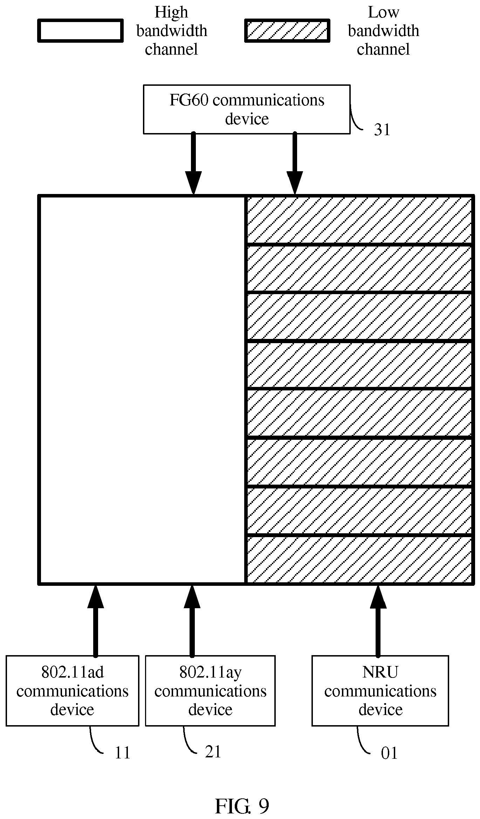

FIG. 9 is a schematic diagram of another data transmission scenario according to an embodiment of the present invention. As shown in FIG. 9, an NRU communications device 01 may transmit data on a low bandwidth (for example, a bandwidth of 200 MHz) channel corresponding to 60 GHz; an 802.11ad communications device 11 may transmit data on a high bandwidth (for example, a bandwidth of 2.16 GHz) channel corresponding to 60 GHz; and an 802.11ay communications device 21 may transmit data on the high bandwidth (for example, the bandwidth of 2.16 GHz) channel corresponding to 60 GHz. A next-generation Wi-Fi communications device 31 may transmit data on the high bandwidth corresponding to 60 GHz, and may further transmit data on the low bandwidth corresponding to 60 GHz. For example, Wi-Fi is short for Wireless Fidelity, and Wi-Fi may be a wireless local area network based on the IEEE 802.11b standard. The next-generation Wi-Fi communications device may also be referred to as a future generation 60 GHz (Future Generation 60 GHz, FG60) communications device. In actual application, a bandwidth of a channel for transmitting data by the NRU communications device 01 may also be another bandwidth less than 2.16 GHz. This is not limited in this embodiment of the present invention.

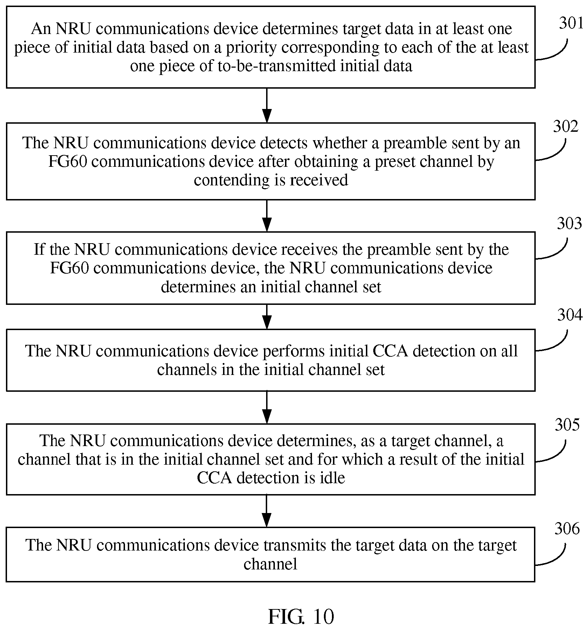

As shown in FIG. 10, an embodiment of the present invention provides still another data transmission method. The data transmission method may be used for a communications device, and the communications device may be an NRU communications device 01 in FIG. 9. The data transmission method may be implemented by a processor 311 in FIG. 2 by executing a program 3131. The data transmission method may include the following steps.

Step 301. An NRU communications device determines target data in at least one piece of initial data based on a priority corresponding to each of the at least one piece of to-be-transmitted initial data.

For example, for a specific step of determining the target data by the NRU communications device in step 301, refer to a specific step of determining the target data by the NRU communications device in step 101 or step 201, and details are not described herein in this embodiment of the present invention.

Step 302. The NRU communications device detects whether a preamble sent by an FG60 communications device after obtaining a preset channel by contending is received.

Specifically, a frequency corresponding to the preset channel is 60 GHz, and a bandwidth of the preset channel is 2.16 GHz. The FG60 communications device, an 802.11ad communications device, and an 802.11ay communications device may all transmit data on the preset channel. When the FG60 communications device needs to transmit data, the FG60 communications device needs to first contend with the 802.11ad communications device and the 802.11ay communications device for the preset channel. After the FG60 communications device obtains the preset channel by contending, the FG60 communications device may broadcast the preamble (preamble), where the preamble may include a network allocation vector (NAV) that is used to indicate a remaining time for data transmission, and the NRU communications device may detect, in real time, whether the preamble sent by the FG60 communications device is received.

In step 302, if no preamble sent by the FG60 communications device after obtaining the preset channel by contending is received, the NRU communications device may repeatedly detect whether the preamble sent by the FG60 communications device is received, in other words, step 302 is repeatedly performed until the preamble is received.

It should be noted that, before the FG60 communications device sends the preamble, the FG60 communications device may contend for a channel on the preset channel corresponding to the frequency of 60 GHz and the bandwidth of 2.16 GHz, or the FG60 communications device may contend for a channel on the preset channel corresponding to the frequency of 60 GHz and the bandwidth of 2.16 GHz and transmit data on the preset channel after obtaining the preset channel by contending. After the FG60 communications device sends the preamble, the FG60 communications device needs to contend with the NRU communications device for a channel on a low bandwidth whose frequency is 60 GHz, and transmit data on a low bandwidth channel after obtaining the channel by contending. For example, the bandwidth corresponding to the low bandwidth channel for transmitting data by the FG60 communications device is the same as the bandwidth of the channel for transmitting data by the NRU communications device. In other words, after the FG60 communications device sends the preamble, the FG60 communications device needs to contend with the NRU communications device on a channel of a same bandwidth, and transmit data after obtaining the channel by contending.

If the preamble sent by the FG60 communications device is not received, step 302 is performed; or if the preamble sent by the FG60 communications device is received, step 303 is performed.

Step 303. If the NRU communications device receives the preamble sent by the FG60 communications device, the NRU communications device determines an initial channel set.

For example, for a specific step of determining the initial channel set by the NRU communications device in step 303, refer to a specific step of determining the initial channel set by the NRU communications device in step 102, and details are not described herein in this embodiment of the present invention.

Step 304. The NRU communications device performs initial CCA detection on all channels in the initial channel set.

Step 305. The NRU communications device determines, as a target channel, a channel that is in the initial channel set and for which a result of the initial CCA detection is idle.

On one hand, if step 301 refers to step 101, for a specific step of performing the initial CCA detection by the NRU communications device in step 304, refer to a specific step of performing the initial CCA detection by the NRU communications device in step 103. For a specific step of determining the target channel by the NRU communications device in step 305, refer to a specific step of determining the target channel in step 104, and details are not described herein in this embodiment of the present invention.

On the other hand, if step 301 refers to step 201, before step 304, the NRU communications device may further determine a threshold for the initial CCA detection, and for a specific step of determining the threshold for the initial CCA detection, refer to the specific step of determining the threshold for the initial CCA detection in step 203. For a specific step of performing the initial CCA detection by the NRU communications device in step 304, refer to a specific step of performing the initial CCA detection by the NRU communications device in step 204. For a specific step of determining the target channel by the NRU communications device in step 305, refer to a specific step of determining the target channel in step 205, and details are not described herein in this embodiment of the present invention.

Step 306. The NRU communications device transmits the target data on the target channel.

If the NRU communications device receives the preamble sent by the FG60 communications device, and the result of the initial CCA detection for the target channel is idle, the NRU communications device may transmit data on the target channel, and does not collide with another communications device (such as the FG60 communications device, the 802.11ad communications device, or the 802.11ay communications device), so as to transmit the target data relatively smoothly. Further, the preamble sent by the FG60 communications device may include the NAV that is used to indicate the remaining time for data transmission, and the NRU communications device may transmit the target data on the target channel based on the remaining time for data transmission indicated by the NAV.

When the NRU communications device needs to transmit the target data, the NRU communications device needs to detect whether the preamble sent by the FG60 communications device after obtaining the preset channel by contending is received. If the preamble is received, the NRU communications device may determine the initial channel set, perform the initial CCA detection on the initial channel set, determine the target channel based on the result of the initial CCA detection, and then transmit the target data on the target channel.

In conclusion, in the data transmission method provided in this embodiment of the present invention, when receiving the preamble sent by the FG60 communications device, the NRU communications device may determine all channels that can be currently accessed, and after determining the target channel for which the result of the initial CCA detection is idle, transmit the target data on the target channel. In other words, the NRU communications device transmits data on the target channel only after determining that the 802.11 communications device does not transmit data, and determining that the FG60 communications device does not transmit data on the target channel, thereby effectively avoiding conflict between the NRU communications device and the 802.11 communications device and the FG60 communications device when transmitting the target data, and implementing mutual compatibility between the NRU communications device, and the 802.11 communications device and the FG60 communications device.

The following is an apparatus embodiment of this application, and the apparatus embodiment may be used to execute the method embodiment of this application. For details not disclosed in the apparatus embodiment of this application, refer to the method embodiment of this application.

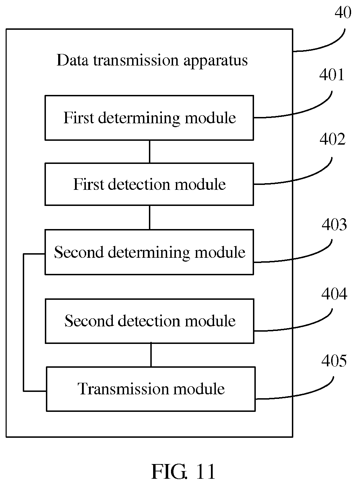

As shown in FIG. 11, an embodiment of the present invention provides another data transmission apparatus 40. The data transmission apparatus 40 may be used for a communications device, the communications device may be an NRU communications device 01 in FIG. 1, and the data transmission apparatus 40 may include:

a first determining module 401, configured to determine an initial channel set, where the initial channel set includes all channels that the communications device can currently access;
a first detection module 402, configured to perform initial CCA detection on all channels in the initial channel set;
a second determining module 403, configured to determine, as a target channel, a channel that is in the initial channel set and for which a result of the initial CCA detection is idle;
a second detection module 404, configured to perform auxiliary CCA detection on a preset channel, where each channel in the initial channel set is a subchannel of the preset channel; and
a transmission module 405, configured to: when a result of the auxiliary CCA detection is idle, transmit target data on the target channel.

In conclusion, in the data transmission apparatus provided in this embodiment of the present invention, after the first determining module determines all the channels that can be currently accessed, and after the second determining module determines the target channel for which the result of the initial CCA detection is idle, the second detection module performs the auxiliary CCA detection on the preset channel again, and the transmission module transmits the target data on the target channel only when the result of the auxiliary CCA detection is idle. In other words, after determining the target channel for transmitting data, the NRU communications device needs to detect whether the 802.11 communications device transmits data on a high bandwidth channel corresponding to the same frequency, and data is transmitted on the target channel only when the 802.11 communications device does not transmit data on the high bandwidth channel of the same frequency, thereby effectively avoiding conflict between the NRU communications device and the 802.11 communications device when transmitting the target data, and implementing mutual compatibility between the NRU communications device and the 802.11 communications device.

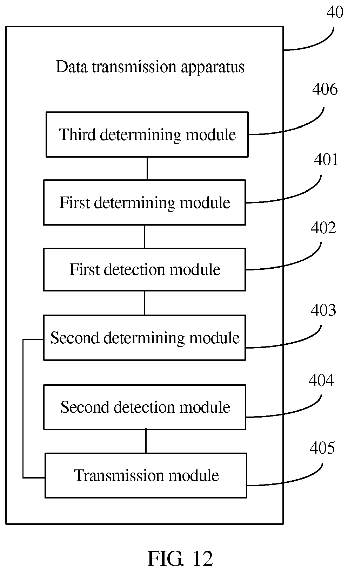

As shown in FIG. 12, an embodiment of the present invention provides still another data transmission apparatus 40. On a basis of FIG. 11, the data transmission apparatus 40 may further include:

a third determining module 406, configured to determine target data in at least one piece of initial data based on a priority corresponding to each of the at least one piece of to-be-transmitted initial data, where the priority of the initial data is one of a first priority, a second priority, a third priority, and a fourth priority in an EDCA mechanism, or a priority in a DCF mechanism.

Optionally, the first detection module 402 may be further configured to:
perform initial CCA detection on all channels in an initial channel set by using the EDCA mechanism.

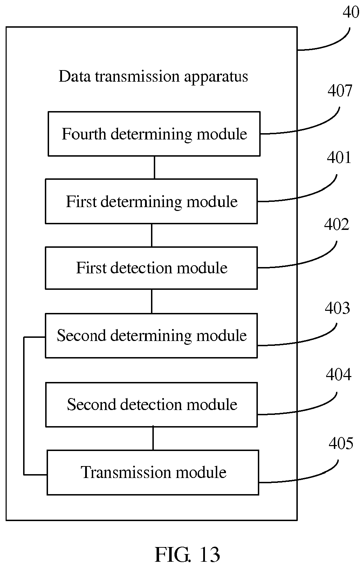

As shown in FIG. 13, an embodiment of the present invention provides yet another data transmission apparatus 40. On a basis of FIG. 11, the data transmission apparatus 40 may further include:
a fourth determining module 407, configured to determine target data in at least one piece of initial data based on a priority corresponding to each of the at least one piece of to-be-transmitted initial data, where the priority of the initial data is one of a first priority, a second priority, a third priority, and a fourth priority in an LBT mechanism.

Optionally, the first detection module 402 may be further configured to:
perform first CCA detection on all the channels in the initial channel set, and if a result of the first CCA detection is busy at a moment during the first CCA detection, stop the first CCA detection and repeatedly perform second CCA detection on the initial channel set until a result of the second CCA detection is idle, and then continue the first CCA detection until the first CCA detection ends.

The second determining module 403 may be further configured to:
determine, as a target channel, a channel that is in the initial channel set and for which the result of the first CCA detection is idle in a preset time period before the first CCA detection ends.

Optionally, the first detection module 402 may be further configured to:
repeatedly perform the second CCA detection on all the channels in the initial channel set until the results of the second CCA detection for all the channels in the initial channel set are idle, and then continue the first CCA detection.

Optionally, the initial channel set includes at least two channels, and the first detection module 402 may be further configured to:

obtain a first subset of the initial channel set by using a dichotomy;
perform the second CCA detection on the first subset;
if a result of the second CCA detection for the first subset is idle, continue the first CCA detection;
if the result of the second CCA detection for the first subset is busy, obtain a second subset of the first subset by using the dichotomy;
perform the second CCA detection on the second subset;
if a result of the second CCA detection for the second subset is idle, continue the first CCA detection;
if the result of the second CCA detection for the second subset is busy, determine whether the second subset consists of a channel of the initial channel set; and
if the second subset consists of a channel of the initial channel set, repeatedly perform the second CCA detection on the second subset until the result of the second CCA detection for the second subset is idle, and then continue the first CCA detection.

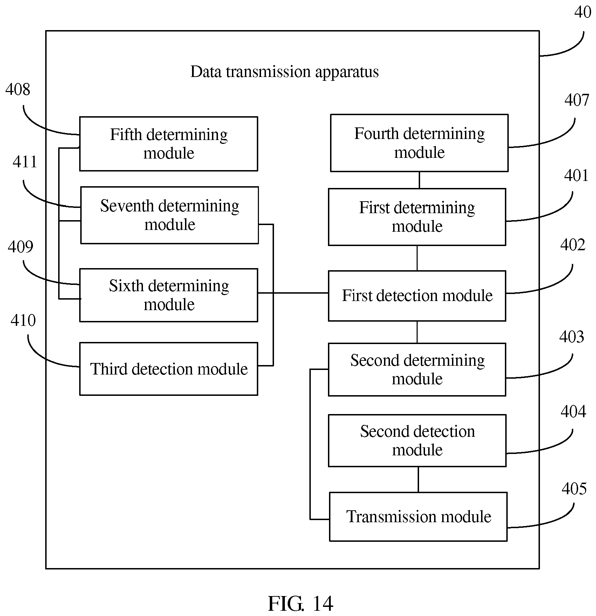

As shown in FIG. 14, another embodiment of the present invention provides a data transmission apparatus 40. On a basis of FIG. 13, the data transmission apparatus 40 may further include:

a fifth determining module 408, configured to determine a quantity of channels in the initial channel set;
a sixth determining module 409, configured to determine a first threshold based on the quantity of channels in the initial channel set and according to a first threshold determining formula, where the first threshold determining formula is: $Y=X+3*\log_2 M$, Y is the first threshold, X is a threshold corresponding to a 20 MHz bandwidth channel, $\log_2 M$ is a logarithm of M with base 2, and M is a quantity of channels participating in CCA detection;
a third detection module 410, configured to detect whether an inter-RAT device exists within a preset range, where a distance between a device within the preset range and the communications device is less than a preset distance; and
a seventh determining module 411, configured to: if the inter-RAT device exists within the preset range, determine a second threshold based on the quantity of channels in the initial channel set and according to a second threshold determining formula, where the second threshold determining formula is:

$$X_{\text{Thresh\_max}} = \min \left\{ \begin{array}{l} T_{\max} + 10\,dB - 3*\log_2(\text{M}) - \sum I, \\ X_r \end{array} \right\}.$$

The first detection module 402 may be further configured to:

perform the first CCA detection on all the channels in the initial channel set by using the second threshold.

The sixth determining module 409 may be further configured to:

if the inter-RAT device does not exist within the preset range, determine the first threshold based on the quantity of channels in the initial channel set and according to the first threshold determining formula; where

$X_{\text{Thresh\_max}}$ is the second threshold, $\min\left\{\begin{array}{l} T_{\max} + 10 - 3*\log 2(M) - \sum I, \\ X_r \end{array}\right\}$ is a minimum value of

$T_{\max}+10-3*\log2(M)-\sum I$ and $X_r$, $T_{max}=-75+10*\log_{10}BW$, $\log_{10}BW$ is a logarithm of BW with base 10, BW is a frequency bandwidth corresponding to the initial channel set, dB is decibel, $I$ is an interference value of the inter-RAT device, $\sum I$ is a sum of the interference values of all the inter-RAT devices within the preset range, and $X_r$ is a maximum allowed transmit threshold.

The first detection module 402 may be further configured to: perform the first CCA detection on all the channels in the initial channel set by using the first threshold.

Optionally, a time period of the first CCA detection includes one fixed time interval of 16 $\mu$s and n slots of 9 $\mu$s, where n is an integer greater than or equal to zero.

Optionally, a preset time period is 9 $\mu$s or 25 $\mu$s.

Optionally, a frequency corresponding to the preset channel is 60 GHz, and a bandwidth of the preset channel is 2.16 GHz.

In conclusion, in the data transmission apparatus provided in this embodiment of the present invention, after the first determining module determines all the channels that can be currently accessed, and after the second determining module determines the target channel for which the result of the initial CCA detection is idle, the second detection module performs the auxiliary CCA detection on the preset channel again, and the transmission module transmits the target data on the target channel only when the result of the auxiliary CCA detection is idle. In other words, after determining the target channel for transmitting data, the NRU communications device needs to detect whether the 802.11 communications device transmits data on a high bandwidth channel corresponding to the same frequency, and data is transmitted on the target channel only when the 802.11 communications device does not transmit data on the high bandwidth channel of the same frequency, thereby effectively avoiding conflict between the NRU communications device and the 802.11 communications device when transmitting the target data, and implementing mutual compatibility between the NRU communications device and the 802.11 communications device.

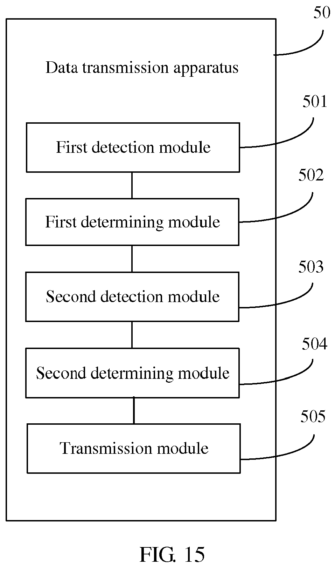

As shown in FIG. 15, another embodiment of the present invention provides another data transmission apparatus 50. The data transmission apparatus may be used for a communications device, the communications device may be a communications device 01 in FIG. 9, and the data transmission apparatus 50 may include:

a first detection module 501, configured to detect whether a preamble sent by a future generation FG60 communications device after obtaining a preset channel by contending is received, where a frequency corresponding to the preset channel is 60 GHz, and a bandwidth of the preset channel is 2.16 GHz;

a first determining module 502, configured to: when the preamble is received, determine an initial channel set, where the initial channel set includes all channels that the communications device can currently access, and each channel in the initial channel set is a subchannel of the preset channel;

a second detection module 503, configured to perform initial clear channel assessment CCA detection on all the channels in the initial channel set;

a second determining module 504, configured to determine, as a target channel, a channel that is in the initial channel set and for which a result of the initial CCA detection is idle; and

a transmission module 505, configured to transmit target data on a target channel.

In conclusion, in the data transmission apparatus provided in this embodiment of the present invention, when the first detection module detects that the preamble sent by the FG60 communications device is received, the first determining module determines all the channels that can be currently accessed, and after the second determining module determines the target channel for which the result of the initial CCA detection is idle, the transmission module transmits the target data on the target channel. In other words, the NRU communications device transmits data on the target channel only after determining that the 802.11 communications device does not transmit data, and determining that the FG60 communications device does not transmit data on the target channel, thereby effectively avoiding conflict between the NRU communications device and the 802.11 communications device and the FG60 communications device when transmitting the target data, and implementing mutual compatibility between the NRU communications device, and the 802.11 communications device and the FG60 communications device.

Optionally, the first detection module 501 may be configured to perform the method in step 302 in the embodiment shown in FIG. 10; the first determining module 502 may be configured to perform the method in step 303 in the embodiment shown in FIG. 10; the second detection module 503 may be configured to perform the method in step 304 in the embodiment shown in FIG. 10; the second determining module 504 may be configured to perform the method in step 305 in the embodiment shown in FIG. 10; and the transmission module 505 may be configured to perform the method in step 306 in the embodiment shown in FIG. 10.

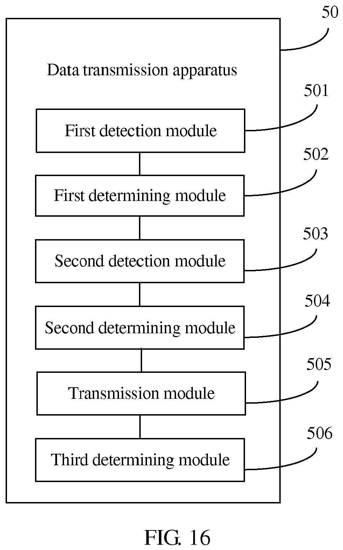

As shown in FIG. 16, another embodiment of the present invention provides still another data transmission apparatus 50. On a basis of FIG. 15, the data transmission apparatus 50 may further include a third determining module 506, which has a same or similar function as the third determining module 406. The third determining module 506 may be configured to perform the method, which is referred to by step 301, in step 101 in the embodiment shown in FIG. 10.

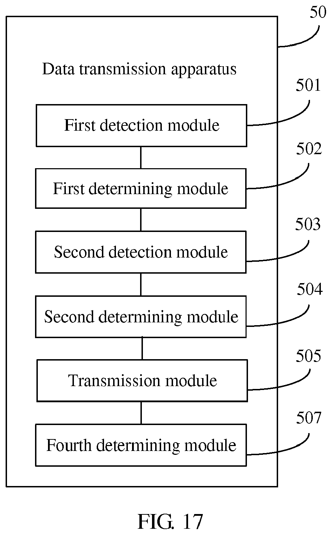

As shown in FIG. 17, another embodiment of the present invention provides yet another data transmission apparatus 50. On a basis of FIG. 15, the data transmission apparatus 50 may further include a fourth determining module 507, which has a same or similar function as the fourth determining module 407. The fourth determining module 507 may be configured to perform the method, which is referred to by step 301, in step 201 in the embodiment shown in FIG. 10.

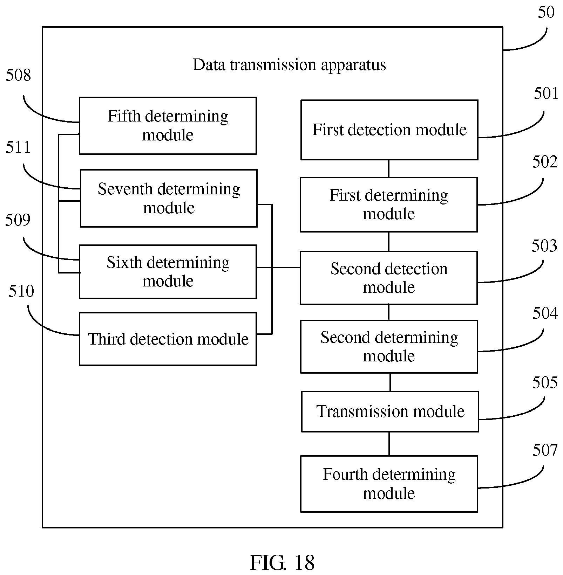

As shown in FIG. 18, another embodiment of the present invention provides a data transmission apparatus 50. On a basis of FIG. 17, the data transmission apparatus 50 may further include a fifth determining module 508, a sixth determining module 509, a third detection module 510, and a seventh determining module 511. The fifth determining module 508 has a same or similar function as the fifth determining module 408; the sixth determining module 509 has a same or similar function as the sixth determining module 409; the third detection module 510 has a same or similar function as the third detection module 410; and the seventh determining module 511 has a same or similar function as the seventh determining module 411. The fifth determining module 508, the sixth determining module 509, the third detection module 510, and the seventh determining module 511 are jointly configured to perform the method for determining a threshold for initial CCA detection that is performed before step 304 in the embodiment shown in FIG. 10. For the method for determining the threshold for the initial CCA detection, refer to the method in step 203 in the embodiment shown in FIG. 4.

Optionally, a preamble may include a NAV that is used to indicate a remaining time for data transmission, and the transmission module 505 may be further configured to transmit target data on a target channel based on the remaining time for data transmission indicated by the NAV.

In conclusion, in the data transmission apparatus provided in this embodiment of the present invention, when the first detection module detects that the preamble sent by the FG60 communications device is received, the first determining module determines all the channels that can be currently accessed, and after the second determining module determines the target channel for which the result of the initial CCA detection is idle, the transmission module transmits the target data on the target channel. In other words, the NRU communications device transmits data on the target channel only after determining that the 802.11 communications device does not transmit data, and determining that the FG60 communications device does not transmit data on the target channel, thereby effectively avoiding conflict between the NRU communications device and the 802.11 communications device and the FG60 communications device when transmitting the target data, and implementing mutual compatibility between the NRU communications device, and the 802.11 communications device and the FG60 communications device.

An embodiment of the present invention provides a data transmission system, where the data transmission system may include a communications device, and the communications device may include a data transmission apparatus shown in FIG. 2, FIG. 11, FIG. 12, FIG. 13, FIG. 14, FIG. 15, FIG. 16, FIG. 17, or FIG. 18.

All or some of the foregoing embodiments may be implemented by using software, hardware, firmware, or any combination thereof. When the foregoing embodiments are implemented by using software, the embodiments may be all or partially implemented in a form of a computer program product. The computer program product includes one or more computer instructions. When the computer program instructions are loaded and executed on the computer, the procedures or functions according to the embodiments of the present invention are all or partially generated. The computer may be a general-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium, a semiconductor medium (for example, a solid state drive), or the like.

It should be noted that a sequence of the steps of the data transmission method provided in the embodiments of the present invention may be properly adjusted, and a step may be added or removed based on situations. Any variation readily figured out by a person skilled in the art within the technical scope disclosed in this application shall fall within the protection scope of this application if falling within the scope defined by the appended claims, and details are not described herein.

A person of ordinary skill in the art may understand that all or some of the steps of the embodiments may be implemented by hardware or a program instructing related hardware. The program may be stored in a computer-readable storage medium. The storage medium may include a read-only memory, a magnetic disk, an optical disc, or the like.

The foregoing descriptions are merely optional embodiments of this application, but are not intended to limit this application. Any modification, equivalent replacement, or improvement made without departing from the principle of this application should fall within the protection scope of this application if falling within the scope defined by the appended claims.

**Claims**

1. A data transmission method, wherein the method is performed by a communications device and comprises:

   determining (202) an initial channel set, wherein the initial channel set comprises all channels that the communications device is currently capable of accessing;
   performing (204) initial clear channel assessment, CCA, detection on all the channels in the initial channel set;
   determining (205), as a target channel, a channel that is in the initial channel set and for which a result of the initial CCA detection is idle;
   performing (206) auxiliary CCA detection on a preset channel, wherein each channel in the initial channel set is a subchannel of the preset channel, a frequency of the preset channel is the same as a frequency of the each channel in the initial channel set, and a bandwidth of the preset channel is larger than a bandwidth of the each channel in the initial channel set; and
   if a result of the auxiliary CCA detection is idle, transmitting target data on the target channel.

2. The method according to claim 1, wherein the performing (204) initial CCA detection on all the channels in the initial channel set comprises:

   performing the initial CCA detection on all the channels in the initial channel set by using an enhanced distributed channel access, EDCA, mechanism; and
   before the determining an initial channel set, the method further comprises:
   determining target data in at least one piece of initial data based on a priority corresponding to each of the at least one piece of to-be-transmitted initial data, wherein the priority of the initial data is one of a first priority, a second priority, a third priority, and a fourth priority in the EDCA mechanism, or a priority in a distributed coordination function, DCF, mechanism.

3. The method according to claim 1, wherein
   the performing (204) initial clear channel assessment CCA detection on all the channels in the initial channel set comprises:

   performing first CCA detection on all the channels in the initial channel set, and if a result of the first CCA detection is busy at a moment during the first CCA detection, stopping the first CCA detection and repeatedly performing second CCA detection on the initial channel set until a result of the second CCA detection is idle, and then continuing the first CCA detection until the first CCA detection ends;
   the determining (205), as a target channel, a channel that is in the initial channel set and for which a result of the initial CCA detection is idle comprises:

   determining, as a target channel, a channel that is in the initial channel set and for which the result of the first CCA detection is idle in a preset time period before the first CCA detection ends; and
   before the determining (202) an initial channel set, the method further comprises:
   determining (201) target data in at least one piece of initial data based on a priority corresponding to each of the at least one piece of to-be-transmitted initial data, wherein the priority of the initial data is one of a first priority, a second priority, a third priority, and a fourth priority in a listen before talk, LBT, mechanism.

4. The method according to claim 3, wherein the repeatedly performing second CCA detection on the initial channel set until a result of the second CCA detection is idle, and then continuing the first CCA detection comprises: repeatedly performing the second CCA detection on all the channels in the initial channel set until the results of the second CCA detection for all the channels in the initial channel set are idle, and then continuing the first CCA detection.

5. The method according to claim 3, wherein the initial channel set comprises at least two channels, and the repeatedly performing second CCA detection on the initial channel set until a result of the second CCA detection is idle, and then continuing the first CCA detection comprises:

    obtaining a first subset of the initial channel set by using a dichotomy;
    performing the second CCA detection on the first subset;
    if a result of the second CCA detection for the first subset is idle, continuing the first CCA detection;
    if the result of the second CCA detection for the first subset is busy, obtaining a second subset of the first subset by using the dichotomy;
    performing the second CCA detection on the second subset;
    if a result of the second CCA detection for the second subset is idle, continuing the first CCA detection;
    if the result of the second CCA detection for the second subset is busy, determining whether the second subset consists of a channel of the initial channel set; and
    if the second subset consists of a channel of the initial channel set, repeatedly performing the second CCA detection on the second subset until the result of the second CCA detection for the second subset is idle, and then continuing the first CCA detection.

6. The method according to claim 3, wherein before the performing first CCA detection on all the channels in the initial channel set, the method further comprises:

    determining a quantity of channels in the initial channel set; and
    determining a first threshold based on the quantity of channels in the initial channel set and according to a first threshold determining formula, wherein the first threshold determining formula is: $Y=X+3^*\log_2 M$, Y is the first threshold, X is a threshold corresponding to a 20 MHz bandwidth channel, $\log_2 M$ is a logarithm of M with base 2, and M is a quantity of channels participating in CCA detection; and
    the performing first CCA detection on all the channels in the initial channel set comprises:
    performing the first CCA detection on all the channels in the initial channel set by using the first threshold.

7. The method according to claim 6, wherein before the determining a first threshold based on the quantity of channels in the initial channel set and according to a first threshold determining formula, the method further comprises:

    detecting whether an inter-RAT device exists within a preset range, wherein a distance between a device within the preset range and the communications device is less than a preset distance; and
    if the inter-RAT device exists within the preset range, determining a second threshold based on the quantity of channels in the initial channel set and according to a second threshold determining formula, wherein the second threshold determining formula is:

$$X_{Thresh\_max} = \min\left\{\begin{matrix} T_{max} + 10\,dB - 3^*\log_2(M) - \sum I, \\ X_r \end{matrix}\right\};$$

the performing first CCA detection on all the channels in the initial channel set comprises:

    performing the first CCA detection on all the channels in the initial channel set by using the second threshold; and
    the determining a first threshold based on the quantity of channels in the initial channel set and according to a first threshold determining formula comprises:

        if the inter-RAT device does not exist within the preset range, determining the first threshold based on the quantity of channels in the initial channel set and according to the first threshold determining formula; wherein

$X_{\text{Thresh\_max}}$ is the second threshold, $\min \begin{Bmatrix} T_{\max} + 10 - 3*\log 2(M) - \sum I, \\ X_r \end{Bmatrix}$ is a minimum

value of $T_{\max}$+10-3*log2(M)-$\sum I$ and $X_r$, $T_{max}$=-75+10*log$_{10}$BW, log$_{10}$ BW is a logarithm of BW with base 10, BW is a frequency bandwidth corresponding to the initial channel set, dB is decibel, $I$ is an interference value of the inter-RAT device, $\sum I$ is a sum of the interference values of all the inter-RAT devices within the preset range, and $X_r$ is a maximum allowed transmit threshold.

8. A data transmission apparatus (40), wherein the data transmission apparatus is used for a communications device and comprises:

a first determining module (401), configured to determine an initial channel set, wherein the initial channel set comprises all channels that the communications device is currently capable of accessing;
a first detection module (402), configured to perform initial clear channel assessment, CCA, detection on all the channels in the initial channel set;
a second determining module (403), configured to determine, as a target channel, a channel that is in the initial channel set and for which a result of the initial CCA detection is idle;
a second detection module (404), configured to perform auxiliary CCA detection on a preset channel, wherein each channel in the initial channel set is a subchannel of the preset channel, a frequency of the preset channel is the same as a frequency of the each channel in the initial channel set, and a bandwidth of the preset channel is larger than a bandwidth of the each channel in the initial channel set; and
a transmission module (405), configured to: when a result of the auxiliary CCA detection is idle, transmit target data on the target channel.

9. The data transmission apparatus (40) according to claim 8, wherein the first detection module (402) is further configured to:

perform the initial CCA detection on all the channels in the initial channel set by using an enhanced distributed channel access, EDCA, mechanism; and
the data transmission apparatus (40) further comprises:
a third determining module (406), configured to determine target data in at least one piece of initial data based on a priority corresponding to each of the at least one piece of to-be-transmitted initial data, wherein the priority of the initial data is one of a first priority, a second priority, a third priority, and a fourth priority in the EDCA mechanism, or a priority in a distributed coordination function, DCF, mechanism.

10. The data transmission apparatus according to claim 8, wherein
the first detection module (402) is further configured to:

perform first CCA detection on all the channels in the initial channel set, and if a result of the first CCA detection is busy at a moment during the first CCA detection, stop the first CCA detection and repeatedly perform second CCA detection on the initial channel set until a result of the second CCA detection is idle, and then continue the first CCA detection until the first CCA detection ends;
the second determining module (403) is further configured to:

determine, as a target channel, a channel that is in the initial channel set and for which the result of the first CCA detection is idle in a preset time period before the first CCA detection ends; and
the data transmission apparatus (40) further comprises:
a fourth determining module (407), configured to determine target data in at least one piece of initial data based on a priority corresponding to each of the at least one piece of to-be-transmitted initial data, wherein the priority of the initial data is one of a first priority, a second priority, a third priority, and a fourth priority in a listen before talk, LBT, mechanism.

11. The data transmission apparatus (40) according to claim 10, wherein the first detection module (402) is further configured to:
repeatedly perform the second CCA detection on all the channels in the initial channel set until the results of the second CCA detection for all the channels in the initial channel set are idle, and then continue the first CCA detection.

12. The data transmission apparatus (40) according to claim 10, wherein the initial channel set comprises at least two channels, and the first detection module (402) is further configured to:

obtain a first subset of the initial channel set by using a dichotomy;
perform the second CCA detection on the first subset;
if a result of the second CCA detection for the first subset is idle, continue the first CCA detection;
if the result of the second CCA detection for the first subset is busy, obtain a second subset of the first subset by using the dichotomy;
perform the second CCA detection on the second subset;
if a result of the second CCA detection for the second subset is idle, continue the first CCA detection;
if the result of the second CCA detection for the second subset is busy, determine whether the second subset consists of a channel of the initial channel set; and
if the second subset consists of a channel of the initial channel set, repeatedly perform the second CCA detection on the second subset until the result of the second CCA detection for the second subset is idle, and then continue the first CCA detection.

13. The data transmission apparatus (40) according to claim 10, wherein the data transmission apparatus (40) further comprises:

a fifth determining module (408), configured to determine a quantity of channels in the initial channel set; and
a sixth determining module (409), configured to determine a first threshold based on the quantity of channels in the initial channel set and according to a first threshold determining formula, wherein the first threshold determining formula is: Y=X+3*log$_2$M, Y is the first threshold, X is a threshold corresponding to a 20 MHz bandwidth channel, log$_2$M is a logarithm of M with base 2, and M is a quantity of channels participating in CCA detection; and
the first detection module (402) is further configured to:
perform the first CCA detection on all the channels in the initial channel set by using the first threshold.

14. The data transmission apparatus (40) according to claim 13, wherein the data transmission apparatus (40) further comprises:

a third detection module (410), configured to detect whether an inter-RAT device exists within a preset range, wherein a distance between a device within the preset range and the communications device is less than a preset distance; and
a seventh determining module (411), configured to: when the inter-RAT device exists within the preset range, determine a second threshold based on the quantity of channels in the initial channel set and according to a second threshold determining formula, wherein the second threshold determining formula is:

$$X_{\text{Thresh\_max}} = \min \left\{ \begin{array}{l} T_{\max} + 10\,dB - 3 * \log_2(\text{M}) - \sum I, \\ X_r \end{array} \right\};$$

the first detection module (402) is further configured to:

perform the first CCA detection on all the channels in the initial channel set by using the second threshold; and
the sixth determining module (409) is further configured to:

when the inter-RAT device does not exist within the preset range, determine the first threshold based on the quantity of channels in the initial channel set and according to the first threshold determining formula; wherein

$X_{\text{Thresh\_max}}$ is the second threshold, $\min \left\{ \begin{array}{l} T_{\max} + 10 - 3 * \log 2(M) - \sum I, \\ X_r \end{array} \right\}$ is a minimum

value of $T_{max}$+10-3*log2($M$)-$\sum I$ and $X_r$ , $T_{max}$=-75+10*log$_{10}$BW, log$_{10}$ $BW$ is a logarithm of BW with base 10, BW is a frequency bandwidth corresponding to the initial channel set, dB is decibel, $I$ is an interference value of the inter-RAT device, $\sum I$ is a sum of the interference values of all the inter-RAT devices within the preset range, and X$_r$ is a maximum allowed transmit threshold.

15. A data transmission system, wherein the data transmission system comprises a communications device, and the communications device comprises the data transmission apparatus (40) according to any one of claims 8 to 14.

**Patentansprüche**

1. Datenübertragungsverfahren, wobei das Verfahren durch eine Kommunikationsvorrichtung durchgeführt wird und Folgendes umfasst:

   Bestimmen (202) eines anfänglichen Kanalsatzes, wobei der anfängliche Kanalsatz alle Kanäle umfasst, auf welche die Kommunikationsvorrichtung aktuell zugreifen kann;
   Durchführen (204) einer anfänglichen Erkennung zur Freikanalanalyse (CCA) an allen Kanälen in dem anfänglichen Kanalsatz;
   Bestimmen (205) eines Kanals, der sich in dem anfänglichen Kanalsatz befindet und für den ein Ergebnis der anfänglichen CCA-Erkennung, frei' lautet, als einen Zielkanal;
   Durchführen (206) einer Hilfs-CCA-Erkennung an einem voreingestellten Kanal, wobei jeder Kanal in dem anfänglichen Kanalsatz ein Unterkanal des voreingestellten Kanals ist, wobei eine Frequenz des voreingestellten Kanals die gleiche ist wie eine Frequenz jedes Kanals in dem anfänglichen Kanalsatz, und wobei eine Bandbreite des voreingestellten Kanals größer ist als eine Brandbreite jedes Kanals in dem anfänglichen Kanalsatz; und wenn ein Ergebnis der Hilfs-CCA-Erkennung 'frei' lautet, Übertragen von Zieldaten auf dem Zielkanal.

2. Verfahren nach Anspruch 1, wobei das Durchführen (204) der anfänglichen CCA-Erkennung an allen Kanälen in dem anfänglichen Kanalsatz Folgendes umfasst:

   Durchführen der anfänglichen CCA-Erkennung an allen Kanälen in dem anfänglichen Kanalsatz unter Verwendung eines Mechanismus für verbesserten verteilten Kanalzugriff (EDCA); und
   wobei das Verfahren vor dem Bestimmen eines anfänglichen Kanalsatzes ferner Folgendes umfasst:
   Bestimmen von Zieldaten in mindestens einem Teil von Anfangsdaten basierend auf einer Priorität, die jedem von dem mindestens einen Teil von zu übertragenden Anfangsdaten entspricht, wobei die Priorität der Anfangsdaten eine von einer ersten Priorität, einer zweiten Priorität, einer dritten Priorität und einer vierten Priorität in dem EDCA-Mechanismus ist oder eine Priorität in einem Mechanismus für verteilte Koordinationsfunktion (DCF) ist.

3. Verfahren nach Anspruch 1, wobei
   das Durchführen (204) der anfänglichen Erkennung zur Freikanalanalyse (CCA) an allen Kanälen in dem anfänglichen Kanalsatz Folgendes umfasst:

   Durchführen einer ersten CCA-Erkennung an allen Kanälen in dem anfänglichen Kanalsatz, und wenn ein Ergebnis der ersten CCA-Erkennung zu einem Zeitpunkt während der ersten CCA-Erkennung 'belegt' lautet, Stoppen der ersten CCA-Erkennung und wiederholtes Durchführen einer zweiten CCA-Erkennung an dem anfänglichen Kanalsatz, bis ein Ergebnis der zweiten CCA-Erkennung 'frei' lautet, und dann Fortsetzen der ersten CCA-Erkennung, bis die erste CCA-Erkennung endet;
   das Bestimmen (205) eines Kanals, der sich in dem anfänglichen Kanalsatz befindet und für den das Ergebnis der anfänglichen CCA-Erkennung 'frei' lautet, als einen Zielkanal Folgendes umfasst:

   Bestimmen eines Kanals, der sich in dem anfänglichen Kanalsatz befindet und für den das Ergebnis der ersten CCA-Erkennung in einem voreingestellten Zeitraum, bevor die erste CCA-Erkennung endet, 'frei' lautet, als einen Zielkanal; und
   das Verfahren vor dem Bestimmen (202) eines anfänglichen Kanalsatzes ferner Folgendes umfasst:
   Bestimmen (201) von Zieldaten in mindestens einem Teil von Anfangsdaten basierend auf einer Priorität, die jedem von dem mindestens einen Teil von zu übertragenden Anfangsdaten entspricht, wobei die Priorität der Anfangsdaten eine von einer ersten Priorität, einer zweiten Priorität einer dritten Priorität und einer vierten Priorität in einem Listen-Before-Talking(LBT)-Mechanismus ist.

4. Verfahren nach Anspruch 3, wobei das wiederholte Durchführen einer zweiten CCA-Erkennung an dem anfänglichen Kanalsatz, bis ein Ergebnis der zweiten CCA-Erkennung 'frei' lautet, und dann das Fortsetzen der ersten CCA-Erkennung Folgendes umfasst:
wiederholtes Durchführen der zweiten CCA-Erkennung an allen Kanälen in dem anfänglichen Kanalsatz, bis die Ergebnisse zweiten CCA-Erkennung für alle Kanäle in dem anfänglichen Kanalsatz 'frei' lauten, und dann Fortsetzen der ersten CCA-Erkennung.

5. Verfahren nach Anspruch 3, wobei der anfängliche Kanalsatz mindestens zwei Kanäle umfasst, und wobei das wiederholte Durchführen einer zweiten CCA-Erkennung an dem anfänglichen Kanalsatz, bis ein Ergebnis der zweiten CCA-Erkennung 'frei' lautet, und dann das Fortsetzen der ersten CCA-Erkennung Folgendes umfasst:

Erlangen eines ersten Teilsatzes des anfänglichen Kanalsatzes unter Verwendung einer Zweiteilung;
Durchführen der zweiten CCA-Erkennung an dem ersten Teilsatz;
wenn ein Ergebnis der zweiten CCA-Erkennung für den ersten Teilsatz 'frei' lautet, Fortsetzen der ersten CCA-Erkennung;
wenn das Ergebnis der zweiten CCA-Erkennung für den ersten Teilsatz 'belegt' lautet, Erlangen eines zweiten Teilsatzes des ersten Teilsatzes unter Verwendung der Zweiteilung;
Durchführen der zweiten CCA-Erkennung an dem zweiten Teilsatz;
wenn ein Ergebnis der zweiten CCA-Erkennung für den zweiten Teilsatz 'frei' lautet, Fortsetzen der ersten CCA-Erkennung;
wenn das Ergebnis der zweiten CCA-Erkennung für den zweiten Teilsatz 'belegt' lautet, Bestimmen, ob der zweite Teilsatz aus einem Kanal des anfänglichen Kanalsatzes besteht; und
wenn der zweite Teilsatz aus einem Kanal des anfänglichen Kanalsatzes besteht, wiederholtes Durchführen der zweiten CCA-Erkennung an dem zweiten Teilsatz, bis das Ergebnis der zweiten CCA-Erkennung für den zweiten Teilsatz 'frei' lautet, und dann Fortsetzen der ersten CCA-Erkennung.

6. Verfahren nach Anspruch 3, wobei vor dem Durchführen der ersten CCA-Erkennung an allen Kanälen in dem anfänglichen Kanalsatz das Verfahren ferner Folgendes umfasst:

Bestimmen einer Anzahl von Kanälen in dem anfänglichen Kanalsatz; und
Bestimmen eines ersten Schwellenwerts basierend auf der Anzahl von Kanälen in dem anfänglichen Kanalsatz und gemäß einer Formel zum Bestimmen des ersten Schwellenwerts, wobei die Formel zum Bestimmen des ersten Schwellenwerts wie folgt lautet:

$Y=X+3*\log_2 M$, wobei Y der erste Schwellenwert ist, X ein Schwellenwert ist, der einem Kanal mit einer Bandbreite von 20 MHz entspricht, $\log_2 M$ ein Logarithmus von M zur Basis 2 ist und M eine Anzahl von Kanälen ist, die an der CCA-Erkennung beteiligt sind; und
wobei das Durchführen der ersten CCA-Erkennung an allen Kanälen in dem anfänglichen Kanalsatz Folgendes umfasst:
Durchführen der ersten CCA-Erkennung an allen Kanälen in dem anfänglichen Kanalsatz unter Verwendung des ersten Schwellenwerts.

7. Verfahren nach Anspruch 6, wobei vor dem Bestimmen eines ersten Schwellenwerts basierend auf der Anzahl von Kanälen in dem anfänglichen Kanalsatz und gemäß einer Formel zum Bestimmen des ersten Schwellenwerts das Verfahren ferner Folgendes umfasst:

Erkennen, ob eine Inter-RAT-Vorrichtung innerhalb eines voreingestellten Bereiches vorhanden ist, wobei ein Abstand zwischen einer Vorrichtung innerhalb des voreingestellten Bereiches und der Kommunikationsvorrichtung geringer ist als ein voreingestellter Abstand; und
wenn die Inter-RAT-Vorrichtung innerhalb des voreingestellten Bereiches vorhanden ist, Bestimmen eines zweiten Schwellenwerts basierend auf der Anzahl von Kanälen in dem anfänglichen Kanalsatz und gemäß einer Formel zum Bestimmen des zweiten Schwellenwerts, wobei die Formel zum Bestimmen des zweiten Schwellenwerts wie folgt lautet:

$$X_{Thresh\_max} = \min \begin{Bmatrix} T_{max} + 10dB - 3 * \log_2(M) - \sum I, \\ X_r \end{Bmatrix};$$

wobei das Durchführen der ersten CCA-Erkennung an allen Kanälen in dem anfänglichen Kanalsatz Folgendes umfasst:

Durchführen der ersten CCA-Erkennung an allen Kanälen in dem anfänglichen Kanalsatz unter Verwendung des zweiten Schwellenwerts; und

wobei das Bestimmen eines ersten Schwellenwerts basierend auf der Anzahl von Kanälen in dem anfänglichen Kanalsatz und gemäß einer Formel zum Bestimmen des ersten Schwellenwerts Folgendes umfasst:

wenn die Inter-RAT-Vorrichtung nicht innerhalb des voreingestellten Bereiches vorhanden ist, Bestimmen des ersten Schwellenwerts basierend auf der Anzahl von Kanälen in dem anfänglichen Kanalsatz und gemäß der Formel zum Bestimmen des ersten Schwellenwerts; wobei

$X_{Thresh\_max}$ der zweite Schwellenwert ist, $\min \begin{Bmatrix} T_{max}+10-3*\log 2(M) - \sum I, \\ X_r \end{Bmatrix}$ ein Minimalwert von

$T_{max}$+10-3*log2(M)-$\sum I$ und $X_r$ ist, $T_{max}$=-75+ 10*$\log_{10}$ BW, $\log_{10}$ BW ein Logarithmus von BW zur Basis 10 ist, BW eine Frequenzbandbreite ist, die dem anfänglichen Kanalsatz entspricht, dB Dezibel ist, $I$ ein Interferenzwert der Inter-RAT-Vorrichtung ist, $\sum I$ eine Summe der Interferenzwerte aller Inter-RAT-Vorrichtungen innerhalb des voreingestellten Bereiches ist und $X_r$ ein maximal zulässiger Übertragungsschwellenwert ist.

8. Datenübertragungsvorrichtung (40), wobei die Datenübertragungsvorrichtung für eine Kommunikationsvorrichtung verwendet wird und Folgendes umfasst:

ein erstes Bestimmungsmodul (401), das dazu konfiguriert ist, einen anfänglichen Kanalsatz zu bestimmen, wobei der anfängliche Kanalsatz alle Kanäle umfasst, auf welche die Kommunikationsvorrichtung aktuell zugreifen kann;
ein erstes Erkennungsmodul (402), das dazu konfiguriert ist, eine anfängliche Erkennung zur Freikanalanalyse (CCA) an allen Kanälen in dem anfänglichen Kanalsatz durchzuführen;
ein zweites Bestimmungsmodul (403), das dazu konfiguriert ist, einen Kanal, der sich in dem anfänglichen Kanalsatz befindet und für den ein Ergebnis der anfänglichen CCA-Erkennung 'frei' lautet, als einen Zielkanal zu bestimmen;
ein zweites Erkennungsmodul (404), das dazu konfiguriert ist, eine Hilfs-CCA-Erkennung an einem voreingestellten Kanal durchzuführen, wobei jeder Kanal in dem anfänglichen Kanalsatz ein Unterkanal des voreingestellten Kanals ist, wobei eine Frequenz des voreingestellten Kanals die gleiche ist wie eine Frequenz jedes Kanals in dem anfänglichen Kanalsatz, und wobei eine Bandbreite des voreingestellten Kanals größer ist als eine Bandbreite jedes Kanals in dem anfänglichen Kanalsatz; und
ein Übertragungsmodul (405), das zu Folgendem konfiguriert ist: wenn ein Ergebnis der Hilfst-CCA-Erkennung 'frei' lautet, Übertragen von Zieldaten auf dem Zielkanal.

9. Datenübertragungsvorrichtung (40) nach Anspruch 8, wobei das erste Erkennungsmodul (402) ferner zu Folgendem konfiguriert ist:

Durchführen der anfänglichen CCA-Erkennung an allen Kanälen in dem anfänglichen Kanalsatz unter Verwendung eines Mechanismus für verbesserten verteilten Kanalzugriff (EDCA); und
wobei die Datenübertragungsvorrichtung (40) ferner Folgendes umfasst:
ein drittes Bestimmungsmodul (406), das dazu konfiguriert ist, Zieldaten in mindestens einem Teil von Anfangsdaten basierend auf einer Priorität zu bestimmen, die jedem von dem mindestens einen Teil von zu übertragenden Anfangsdaten entspricht, wobei die Priorität der Anfangsdaten eine von einer ersten Priorität, einer zweiten Priorität, einer dritten Priorität und einer vierten Priorität in dem EDCA-Mechanismus ist oder eine Priorität in einem Mechanismus für verteilte Koordinationsfunktion (DCF) ist.

10. Datenübertragungsvorrichtung nach Anspruch 8, wobei das erste Erkennungsmodul (402) ferner zu Folgendem konfiguriert ist:

Durchführen einer ersten CCA-Erkennung an allen Kanälen in dem anfänglichen Kanalsatz, und wenn ein Ergebnis der ersten CCA-Erkennung zu einem Zeitpunkt während der ersten CCA-Erkennung 'belegt' lautet, Stoppen der ersten CCA-Erkennung und wiederholtes Durchführen einer zweiten CCA-Erkennung an dem anfänglichen Kanalsatz, bis ein Ergebnis der zweiten CCA-Erkennung 'frei' lautet, und dann Fortsetzen der ersten CCA-Erkennung, bis die erste CCA-Erkennung endet;

das zweite Bestimmungsmodul (403) ferner zu Folgendem konfiguriert ist:

Bestimmen eines Kanals, der sich in dem anfänglichen Kanalsatz befindet und für den das Ergebnis der ersten CCA-Erkennung in einem voreingestellten Zeitraum, bevor die erste CCA-Erkennung endet, 'frei' lautet, als einen Zielkanal; und

die Datenübertragungsvorrichtung (40) ferner Folgendes umfasst: ein viertes Bestimmungsmodul (407), das dazu konfiguriert ist, Zieldaten in mindestens einem Teil von Anfangsdaten basierend auf einer Priorität zu bestimmen, die jedem von dem mindestens einen Teil von zu übertragenden Anfangsdaten entspricht, wobei die Priorität der Anfangsdaten eine von einer ersten Priorität, einer zweiten Priorität einer dritten Priorität und einer vierten Priorität in einem Listen-Before-Talk(LBT)-Mechanismus ist.

11. Datenübertragungsvorrichtung (40) nach Anspruch 10, wobei das erste Erkennungsmodul (402) ferner zu Folgendem konfiguriert ist:

wiederholtes Durchführen der zweiten CCA-Erkennung an allen Kanälen in dem anfänglichen Kanalsatz, bis die Ergebnisse der zweiten CCA-Erkennung für alle Kanäle in dem anfänglichen Kanalsatz 'frei' lauten, und dann Fortsetzen der ersten CCA-Erkennung.

12. Datenübertragungsvorrichtung (40) nach Anspruch 10, wobei der anfängliche Kanalsatz mindestens zwei Kanäle umfasst, und wobei das erste Erkennungsmodul (402) ferner zu Folgendem konfiguriert ist:

Erlangen eines ersten Teilsatzes des anfänglichen Kanalsatzes unter Verwendung einer Zweiteilung;

Durchführen der zweiten CCA-Erkennung an dem ersten Teilsatz; wenn ein Ergebnis der zweiten CCA-Erkennung für den ersten Teilsatz 'frei' lautet, Fortsetzen der ersten CCA-Erkennung;

wenn das Ergebnis der zweiten CCA-Erkennung für den ersten Teilsatz 'belegt' lautet, Erlangen eines zweiten Teilsatzes des ersten Teilsatzes unter Verwendung der Zweiteilung;

Durchführen der zweiten CCA-Erkennung an dem zweiten Teilsatz;

wenn ein Ergebnis der zweiten CCA-Erkennung für den zweiten Teilsatz 'frei' lautet, Fortsetzen der ersten CCA-Erkennung;

wenn das Ergebnis der zweiten CCA-Erkennung für den zweiten Teilsatz 'belegt' lautet, Bestimmen, ob der zweite Teilsatz aus einem Kanal des anfänglichen Kanalsatzes besteht; und

wenn der zweite Teilsatz aus einem Kanal des anfänglichen Kanalsatzes besteht, wiederholtes Durchführen der zweiten CCA-Erkennung an dem zweiten Teilsatz, bis das Ergebnis der zweiten CCA-Erkennung für den zweiten Teilsatz 'frei' lautet, und dann Fortsetzen der ersten CCA-Erkennung.

13. Datenübertragungsvorrichtung (40) nach Anspruch 10, wobei die Datenübertragungsvorrichtung (40) ferner Folgendes umfasst:

ein fünftes Bestimmungsmodul (408), das dazu konfiguriert ist, eine Anzahl von Kanälen in dem anfänglichen Kanalsatz zu bestimmen; und

ein sechstes Bestimmungsmodul (409), das dazu konfiguriert ist, einen ersten Schwellenwert basierend auf der Anzahl von Kanälen in dem anfänglichen Kanalsatz und gemäß einer Formel zum Bestimmen des ersten Schwellenwerts zu bestimmen, wobei die Formel zum Bestimmen des ersten Schwellenwerts wie folgt lautet:

$Y = X + 3*\log_2 M$, wobei $Y$ der erste Schwellenwert ist, $X$ ein Schwellenwert ist, der einem Kanal mit einer Bandbreite von 20 MHz entspricht, $\log_2 M$ ein Logarithmus von $M$ zur Basis 2 ist und $M$ eine Anzahl von Kanälen ist, die an der CCA-Erkennung beteiligt sind; und

wobei das erste Erkennungsmodul (402) ferner zu Folgendem konfiguriert ist:

Durchführen der ersten CCA-Erkennung an allen Kanälen in dem anfänglichen Kanalsatz unter Verwendung des ersten Schwellenwerts.

14. Datenübertragungsvorrichtung (40) nach Anspruch 13, wobei die Datenübertragungsvorrichtung (40) ferner Folgendes umfasst:

ein drittes Erkennungsmodul (410), das dazu konfiguriert ist, zu erkennen, ob eine Inter-RAT-Vorrichtung innerhalb eines voreingestellten Bereiches vorhanden ist, wobei ein Abstand zwischen einer Vorrichtung innerhalb des voreingestellten Bereiches und der Kommunikationsvorrichtung geringer ist als ein voreingestellter Abstand; und

ein siebtes Bestimmungsmodul (411), das zu Folgendem konfiguriert ist: wenn die Inter-RAT-Vorrichtung innerhalb des voreingestellten Bereiches vorhanden ist, Bestimmen eines zweiten Schwellenwerts basierend auf der Anzahl von Kanälen in dem anfänglichen Kanalsatz und gemäß einer Formel zum Bestimmen des zweiten Schwellenwerts, wobei die Formel zum Bestimmen des zweiten Schwellenwerts wie folgt lautet:

$$X_{Thresh\_max} = \min \begin{Bmatrix} T_{max} + 10dB - 3 * \log_2(M) - \sum I, \\ X_r \end{Bmatrix};$$

wobei das erste Erkennungsmodul (402) ferner zu Folgendem konfiguriert ist:

Durchführen der ersten CCA-Erkennung an allen Kanälen in dem anfänglichen Kanalsatz unter Verwendung des zweiten Schwellenwerts; und
wobei das sechste Erkennungsmodul (409) ferner zu Folgendem konfiguriert ist:

wenn die Inter-RAT-Vorrichtung nicht innerhalb des voreingestellten Bereiches vorhanden ist, Bestimmen des ersten Schwellenwerts basierend auf der Anzahl von Kanälen in dem anfänglichen Kanalsatz und gemäß der Formel zum Bestimmen des ersten Schwellenwerts; wobei

$X_{Thresh\_max}$ der zweite Schwellenwert ist, $\min \begin{Bmatrix} T_{max} + 10 - 3 * \log 2(M) - \sum I, \\ X_r \end{Bmatrix}$ ein Minimalwert von $T_{max}$ + 10 - 3 $*$ log2($M$) - $\sum I$ und $X_r$ ist, $T_{max}$ = -75 + 10 $*$ $\log_{10}$ BW, $\log_{10}$ BW ein Logarithmus von BW zur Basis 10 ist, BW eine Frequenzbandbreite ist, die dem anfänglichen Kanalsatz entspricht, dB Dezibel ist, $I$ ein Interferenzwert der Inter-RAT-Vorrichtung ist, $\sum I$ eine Summe der Interferenzwerte aller Inter-RAT-Vorrichtungen innerhalb des voreingestellten Bereiches ist und Xr ein maximal zulässiger Übertragungsschwellenwert ist.

15. Datenübertragungssystem, wobei das Datenübertragungssystem eine Kommunikationsvorrichtung umfasst und die Kommunikationsvorrichtung die Datenübertragungsvorrichtung (40) nach einem der Ansprüche 8 bis 14 umfasst.

**Revendications**

1. Procédé de transmission de données, dans lequel le procédé est exécuté par un dispositif de communication et comprend :

la détermination (202) d'un ensemble de canaux initial, dans lequel l'ensemble de canaux initial comprend tous les canaux auxquels le dispositif de communication est actuellement capable d'accéder ;
l'exécution (204) d'une détection d'évaluation de canal libre, CCA, initiale, sur tous les canaux dans l'ensemble de canaux initial ;
la détermination (205), en tant que canal cible, d'un canal qui se trouve dans l'ensemble de canaux initial et pour lequel un résultat de la détection CCA initiale est libre ;
l'exécution (206) d'une détection CCA auxiliaire sur un canal prédéfini, dans lequel chaque canal dans l'ensemble de canaux initial est un sous-canal du canal prédéfini, une fréquence du canal prédéfini est la même qu'une fréquence de chaque canal dans l'ensemble de canaux initial, et une bande passante du canal prédéfini est plus grande qu'une bande passante de chaque canal dans l'ensemble de canaux initial ; et
si un résultat de la détection CCA auxiliaire est libre, la transmission de données cibles sur le canal cible.

2. Procédé selon la revendication 1, dans lequel l'exécution (204) de la détection CCA initiale sur tous les canaux dans l'ensemble de canaux initial comprend :

l'exécution de la détection CCA initiale sur tous les canaux dans l'ensemble de canaux initial à l'aide d'un mécanisme d'accès à un canal distribué amélioré, EDCA ; et
avant la détermination d'un ensemble de canaux initial, le procédé comprend en outre :

la détermination de données cibles dans au moins une donnée initiale sur la base d'une priorité correspondant à chacun de l'au moins une donnée initiale à transmettre, dans lequel la priorité des données initiales est l'une d'une première priorité, d'une deuxième priorité, d'une troisième priorité et d'une quatrième priorité dans le mécanisme EDCA, ou d'une priorité dans un mécanisme de fonction de coordination distribuée, DCF.

3. Procédé selon la revendication 1, dans lequel l'exécution (204) de la détection d'évaluation de canal libre, CCA, initiale sur tous les canaux dans l'ensemble de canaux initial comprend :

l'exécution d'une première détection CCA sur tous les canaux dans l'ensemble de canaux initial, et si un résultat de la première détection CCA est occupé à un moment pendant la première détection CCA, l'arrêt de la première détection CCA et

l'exécution répétée de la seconde détection CCA sur l'ensemble de canaux initial jusqu'à ce qu'un résultat de la seconde détection CCA soit libre, puis la poursuite de la première détection CCA jusqu'à la fin de la première détection CCA ;

la détermination (205), en tant que canal cible, d'un canal qui se trouve dans l'ensemble de canaux initial et pour lequel un résultat de la détection CCA initiale est libre comprend :

la détermination, en tant que canal cible, d'un canal qui se trouve dans l'ensemble de canaux initial et pour lequel le résultat de la première détection CCA est libre dans une période de temps prédéfinie avant la fin de la première détection CCA ; et

avant la détermination (202) d'un ensemble de canaux initial, le procédé comprend en outre :

la détermination (201) de données cibles dans au moins une donnée initiale sur la base d'une priorité correspondant à chacun de l'au moins une donnée initiale à transmettre, dans lequel la priorité des données initiales est l'une d'une première priorité, d'une deuxième priorité, d'une troisième priorité et d'une quatrième priorité dans un mécanisme d'accès multiple avec écoute de porteuse, LBT.

4. Procédé selon la revendication 3, dans lequel l'exécution répétée de la seconde détection CCA sur l'ensemble de canaux initial jusqu'à ce qu'un résultat de la seconde détection CCA soit libre, puis la poursuite de la première détection CCA comprend :

l'exécution répétée de la seconde détection CCA sur tous les canaux dans l'ensemble de canaux initial jusqu'à ce que les résultats de la seconde détection CCA pour tous les canaux dans l'ensemble de canaux initial soient libres, puis la poursuite de la première détection CCA.

5. Procédé selon la revendication 3, dans lequel l'ensemble de canaux initial comprend au moins deux canaux, et l'exécution répétée de la seconde détection CCA sur l'ensemble de canaux initial jusqu'à ce qu'un résultat de la seconde détection CCA soit libre, puis la poursuite de la première détection CCA comprend :

l'obtention d'un premier sous-ensemble de l'ensemble de canaux initial à l'aide d'une dichotomie ;
l'exécution de la seconde détection CCA sur le premier sous-ensemble ;
si un résultat de la seconde détection CCA pour le premier sous-ensemble est libre, la poursuite de la première détection CCA ;
si le résultat de la seconde détection CCA pour le premier sous-ensemble est occupé, l'obtention d'un second sous-ensemble du premier sous-ensemble à l'aide de la dichotomie ;
l'exécution de la seconde détection CCA sur le second sous-ensemble ;
si un résultat de la seconde détection CCA pour le second sous-ensemble est libre, la poursuite de la première détection CCA ;
si le résultat de la seconde détection CCA pour le second sous-ensemble est occupé, le fait de déterminer si le second sous-ensemble est constitué d'un canal de l'ensemble de canaux initial ; et
si le second sous-ensemble est constitué d'un canal de l'ensemble de canaux initial, l'exécution répétée de la seconde détection CCA sur le second sous-ensemble jusqu'à ce que le résultat de la seconde détection CCA pour le second sous-ensemble soit libre, puis la poursuite de la première détection CCA.

6. Procédé selon la revendication 3, dans lequel, avant l'exécution de la première détection CCA sur tous les canaux dans l'ensemble de canaux initial, le procédé comprend en outre :

la détermination d'une quantité de canaux dans l'ensemble de canaux initial ; et
la détermination d'un premier seuil sur la base de la quantité de canaux dans l'ensemble de canaux initial et selon une première formule de détermination de seuil, dans lequel la première formule de détermination de

seuil est : Y=X+3*log$_2$M, Y est le premier seuil, X est un seuil correspondant à un canal de bande passante de 20 MHz, log$_2$M est un logarithme de M de base 2, et M est une quantité de canaux participant à la détection CCA ; et

l'exécution de la première détection CCA sur tous les canaux dans l'ensemble de canaux initial comprend :

l'exécution de la première détection CCA sur tous les canaux dans l'ensemble de canaux initial à l'aide du premier seuil.

**7.** Procédé selon la revendication 6, dans lequel avant la détermination d'un premier seuil sur la base de la quantité de canaux dans l'ensemble de canaux initial et selon une première formule de détermination de seuil, le procédé comprend en outre :

le fait de détecter si un dispositif inter-RAT existe dans une plage prédéfinie, dans lequel une distance entre un dispositif dans la plage prédéfinie et le dispositif de communication est inférieure à une distance prédéfinie ; et si le dispositif inter-RAT existe dans la plage prédéfinie, la détermination d'un second seuil sur la base de la quantité de canaux dans l'ensemble de canaux initial et selon une seconde formule de détermination de seuil, dans lequel la seconde formule de détermination de seuil est :

$$X_{Seuil\_max} = \min \begin{Bmatrix} T_{max} + 10dB - 3 * \log_2(M) - \sum I, \\ X_r \end{Bmatrix};$$

l'exécution de la première détection CCA sur tous les canaux dans l'ensemble de canaux initial comprend :

l'exécution de la première détection CCA sur tous les canaux dans l'ensemble de canaux initial à l'aide du second seuil ; et

la détermination d'un premier seuil sur la base de la quantité de canaux dans l'ensemble de canaux initial et selon une première formule de détermination de seuil comprend :

si le dispositif inter-RAT n'existe pas dans la plage prédéfinie, la détermination du premier seuil sur la base de la quantité de canaux dans l'ensemble de canaux initial et selon la première formule de détermination de seuil ; où

X$_{Thresh\_max}$ est le second seuil, $\min \begin{Bmatrix} T_{max} + 10 - 3 * \log 2(M) - \sum I, \\ X_r \end{Bmatrix}$ est une valeur minimale de $T_{max}$ + 10 - 3 $*$ log2(M) - $\sum I$ et X$_r$, $T_{max}$ = -75 + 10 $*$ log$_{10}$ BW, log$_{10}$ BW est un logarithme de BW de base 10, BW est une bande passante de fréquence correspondant à l'ensemble de canaux initial, dB signifie décibel, I est une valeur d'interférence du dispositif inter-RAT, $\sum I$ est une somme des valeurs d'interférence de tous les dispositifs inter-RAT dans la plage prédéfinie, et X$_r$ est un seuil de transmission maximal autorisé.

**8.** Appareil de transmission de données (40), dans lequel l'appareil de transmission de données est utilisé pour un dispositif de communication et comprend :

un premier module de détermination (401), configuré pour déterminer un ensemble de canaux initial, dans lequel l'ensemble de canaux initial comprend tous les canaux auxquels le dispositif de communication est actuellement capable d'accéder ;

un premier module de détection (402), configuré pour exécuter une détection d'évaluation de canal libre, CCA, initiale sur tous les canaux dans l'ensemble de canaux initial ;

un deuxième module de détermination (403), configuré pour déterminer, en tant que canal cible, un canal qui se trouve dans l'ensemble de canaux initial et pour lequel un résultat de la détection CCA initiale est libre ;

un deuxième module de détection (404), configuré pour exécuter une détection CCA auxiliaire sur un canal prédéfini, dans lequel chaque canal dans l'ensemble de canaux initial est un sous-canal du canal prédéfini, une fréquence du canal prédéfini est la même qu'une fréquence de chaque canal dans l'ensemble de canaux initial, et une bande passante du canal prédéfini est plus grande qu'une bande passante de chaque canal dans l'ensemble de canaux initial ; et

un module de transmission (405), configuré pour : lorsqu'un résultat de la détection CCA auxiliaire est libre, transmettre des données cibles sur le canal cible.

9. Appareil de transmission de données (40) selon la revendication 8, dans lequel le premier module de détection (402) est en outre configuré pour :

> exécuter la détection CCA initiale sur tous les canaux dans l'ensemble de canaux initial à l'aide d'un mécanisme d'accès à un canal distribué amélioré, EDCA ; et
> l'appareil de transmission de données (40) comprend en outre :
> un troisième module de détermination (406), configuré pour déterminer les données cibles dans au moins une donnée initiale sur la base d'une priorité correspondant à chacune de l'au moins une donnée initiale à transmettre, dans lequel la priorité des données initiales est l'une d'une première priorité, d'une deuxième priorité, d'une troisième priorité et d'une quatrième priorité dans le mécanisme EDCA, ou d'une priorité dans un mécanisme de fonction de coordination distribuée, DCF.

10. Appareil de transmission de données selon la revendication 8, dans lequel
le premier module de détection (402) est en outre configuré pour :

> exécuter une première détection CCA sur tous les canaux dans l'ensemble de canaux initial, et si un résultat de la première détection CCA est occupé à un moment pendant la première détection CCA, arrêter la première détection CCA et exécuter de manière répétée une seconde détection CCA sur l'ensemble de canaux initial jusqu'à ce qu'un résultat de la seconde détection CCA soit libre, puis poursuivre la première détection CCA jusqu'à la fin de la première détection CCA ;
> le deuxième module de détermination (403) est en outre configuré pour :
>
>> déterminer, en tant que canal cible, un canal qui se trouve dans l'ensemble de canaux initial et pour lequel le résultat de la première détection CCA est libre dans une période de temps prédéfinie avant la fin de la première détection CCA ; et
>> l'appareil de transmission de données (40) comprend en outre :
>> un quatrième module de détermination (407), configuré pour déterminer des données cibles dans au moins une donnée initiale sur la base d'une priorité correspondant à chacune de l'au moins une donnée initiale à transmettre, dans lequel la priorité des données initiales est l'une d'une première priorité, d'une deuxième priorité, d'une troisième priorité et d'une quatrième priorité dans un mécanisme d'accès multiple avec écoute de porteuse, LBT.

11. Appareil de transmission de données (40) selon la revendication 10, dans lequel le premier module de détection (402) est en outre configuré pour :
exécuter de manière répétée la seconde détection CCA sur tous les canaux dans l'ensemble de canaux initial jusqu'à ce que les résultats de la seconde détection CCA pour tous les canaux dans l'ensemble de canaux initial soient libre, puis poursuivre la première détection CCA.

12. Appareil de transmission de données (40) selon la revendication 10, dans lequel l'ensemble de canaux initial comprend au moins deux canaux, et le premier module de détection (402) est en outre configuré pour :

> obtenir un premier sous-ensemble de l'ensemble de canaux initial à l'aide d'une dichotomie ;
> exécuter la seconde détection CCA sur le premier sous-ensemble ;
> si un résultat de la seconde détection CCA pour le premier sous-ensemble est libre, poursuivre la première détection CCA ;
> si le résultat de la seconde détection CCA pour le premier sous-ensemble est occupé, obtenir un second sous-ensemble du premier sous-ensemble à l'aide de la dichotomie ;
> exécuter la seconde détection CCA sur le second sous-ensemble ;
> si un résultat de la seconde détection CCA pour le second sous-ensemble est libre, poursuivre la première détection CCA ;
> si le résultat de la seconde détection CCA pour le second sous-ensemble est occupé, déterminer si le second sous-ensemble est constitué d'un canal de l'ensemble de canaux initial ; et
> si le second sous-ensemble est constitué d'un canal de l'ensemble de canaux initial, exécuter de manière répétée la seconde détection CCA sur le second sous-ensemble jusqu'à ce que le résultat de la seconde détection CCA pour le second sous-ensemble soit libre, puis poursuivre la première détection CCA.

13. Appareil de transmission de données (40) selon la revendication 10, dans lequel l'appareil de transmission de données (40) comprend en outre :

un cinquième module de détermination (408), configuré pour déterminer une quantité de canaux dans l'ensemble de canaux initial ; et

un sixième module de détermination (409), configuré pour déterminer un premier seuil sur la base de la quantité de canaux dans l'ensemble de canaux initial et selon une première formule de détermination de seuil, dans lequel la première formule de détermination de. seuil est : Y=X+3*log$_2$M, Y est le premier seuil, X est un seuil correspondant à un canal de bande passante de 20 MHz, log$_2$M est un logarithme de M de base 2, et M est une quantité de canaux participant à la détection CCA ; et

le premier module de détection (402) est en outre configuré pour :

exécuter la première détection CCA sur tous les canaux dans l'ensemble de canaux initial à l'aide du premier seuil.

**14.** Appareil de transmission de données (40) selon la revendication 13, dans lequel l'appareil de transmission de données (40) comprend en outre :

un troisième module de détection (410), configuré pour détecter si un dispositif inter-RAT existe dans une plage prédéfinie, dans lequel une distance entre un dispositif dans la plage prédéfinie et le dispositif de communication est inférieure à une distance prédéfinie ; et

un septième module de détermination (411), configuré pour :

lorsque le dispositif inter-RAT existe dans la plage prédéfinie, déterminer un second seuil sur la base de la quantité de canaux dans l'ensemble de canaux initial et selon une seconde formule de détermination de seuil, dans lequel la seconde formule de détermination de seuil est :

$$X_{Seuil\_max} = \min \begin{Bmatrix} T_{max} + 10dB - 3*\log_2(M) - \sum I, \\ X_r \end{Bmatrix};$$

le premier module de détection (402) est en outre configuré pour :

exécuter la première détection CCA sur tous les canaux dans l'ensemble de canaux initial à l'aide du second seuil ; et

le sixième module de détermination (409) est en outre configuré pour :

lorsque le dispositif inter-RAT n'existe pas dans la plage prédéfinie, déterminer le premier seuil sur la base de la quantité de canaux dans l'ensemble de canaux initial et selon la première formule de détermination de seuil ; dans lequel $X_{Seuil\_max}$ est le second seuil, $\min \begin{Bmatrix} T_{max} + 10 - 3*\log 2(M) - \sum I, \\ X_r \end{Bmatrix}$

est une valeur minimale de $T_{max}$ + 10 - 3 * log2(M) - $\sum I$ et $X_r$, $T_{max}$ = -75 + 10 * $\log_{10} BW$, $\log_{10} BW$ est un logarithme de BW de base 10, BW est une bande passante de fréquence correspondant à l'ensemble de canaux initial, dB signifie décibel, $I$ est une valeur d'interférence du dispositif inter-RAT, $\sum I$ est une somme des valeurs d'interférence de tous les dispositifs inter-RAT dans la plage prédéfinie, et $X_r$ est un seuil de transmission maximal autorisé.

**15.** Système de transmission de données, dans lequel le système de transmission de données comprend un dispositif de communication, et le dispositif de communication comprend l'appareil de transmission de données (40) selon l'une quelconque des revendications 8 à 14.

High
bandwidth
channel

Low
bandwidth
channel

802.11ad
communications
device

11

802.11ay
communications
device

21

NRU
communications
device

01

FIG. 1

FIG. 2

An NRU communications device determines target data in at least one piece of initial data based on a priority corresponding to each of the at least one piece of to-be-transmitted initial data    101

The NRU communications device determines an initial channel set    102

The NRU communications device performs initial CCA detection on all channels in the initial channel set by using an EDCA mechanism    103

The NRU communications device determines, as a target channel, a channel that is in the initial channel set and for which a result of the initial CCA detection is idle    104

The NRU communications device performs auxiliary CCA detection on a preset channel    105

If a result of the auxiliary CCA detection is idle, the NRU communications device transmits the target data on the target channel    106

FIG. 3

An NRU communications device determines target data in at least one piece of initial data based on a priority corresponding to each of the at least one piece of to-be-transmitted initial data  201

The NRU communications device determines an initial channel set  202

The NRU communications device determines a threshold for initial CCA detection  203

The NRU communications device performs initial CCA detection on all channels in the initial channel set  204

The NRU communications device determines, as a target channel, a channel that is in the initial channel set and for which a result of the initial CCA detection is idle  205

The NRU communications device performs auxiliary CCA detection on a preset channel  206

If a result of the auxiliary CCA detection is idle, the NRU communications device transmits the target data on the target channel  207

FIG. 4

FIG. 5

FIG. 6

FIG. 7

FIG. 8

High bandwidth channel

Low bandwidth channel

FG60 communications device

31

802.11ad communications device

11

802.11ay communications device

21

NRU communications device

01

FIG. 9

An NRU communications device determines target data in at least one piece of initial data based on a priority corresponding to each of the at least one piece of to-be-transmitted initial data

301

The NRU communications device detects whether a preamble sent by an FG60 communications device after obtaining a preset channel by contending is received

302

If the NRU communications device receives the preamble sent by the FG60 communications device, the NRU communications device determines an initial channel set

303

The NRU communications device performs initial CCA detection on all channels in the initial channel set

304

The NRU communications device determines, as a target channel, a channel that is in the initial channel set and for which a result of the initial CCA detection is idle

305

The NRU communications device transmits the target data on the target channel

306

FIG. 10

40

Data transmission apparatus

401

First determining module

402

First detection module

403

Second determining module

404

Second detection module

405

Transmission module

FIG. 11

40

Data transmission apparatus

406

Third determining module

401

First determining module

402

First detection module

403

Second determining module

404

Second detection module

405

Transmission module

FIG. 12

40

Data transmission apparatus

Fourth determining module — 407

First determining module — 401

First detection module — 402

Second determining module — 403

Second detection module — 404

Transmission module — 405

FIG. 13

FIG. 14

50

Data transmission apparatus

501

First detection module

502

First determining module

503

Second detection module

504

Second determining module

505

Transmission module

FIG. 15

50

Data transmission apparatus

501

First detection module

502

First determining module

503

Second detection module

504

Second determining module

505

Transmission module

506

Third determining module

FIG. 16

50

Data transmission apparatus

501

First detection module

502

First determining module

503

Second detection module

504

Second determining module

505

Transmission module

507

Fourth determining module

FIG. 17

50

Data transmission apparatus

508

Fifth determining
module

511

Seventh determining
module

509

Sixth determining
module

510

Third detection module

501

First detection module

502

First determining
module

503

Second detection
module

504

Second determining
module

505

Transmission module

507

Fourth determining
module

FIG. 18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016010684 A1